# EUROPEAN PATENT SPECIFICATION

(11) **EP 3 833 476 B1**
(45) Date of publication and mention of the grant of the patent: **17.04.2024**
(21) Application number: 19847884.4
(22) Date of filing: 02.08.2019
(51) Int. Cl.: B01J 31/16, B01J 31/18, B01J 31/28, B01J 31/22

(54) **METAL-ORGANIC FRAMEWORK CATALYSTS, AND USES THEREOF**
METALL-ORGANISCHE GERÜSTKATALYSATOREN UND DEREN VERWENDUNGEN
CATALYSEURS DE STRUCTURES ORGANOMÉTALLIQUES ET LEURS UTILISATIONS

(30) Priority: 09.08.2018 US 201862716767 P
(43) Date of publication of application: 16.06.2021
(73) Proprietor: Novomer, Inc., Rochester, NY 14624 (US)
(72) Inventor: SOOKRAJ, Sadesh H., Boston, Massachusetts 02114 (US); WILLIAMS, Derek, Boston, Massachusetts 02114 (US)
(74) Representative: Tostmann, Holger Carl
(86) International application number: PCT/US2019/044940
(87) International publication number: WO 2020/033267

(56) References cited:
- US-A1- 2017 096 407
- DAWEI FENG ET AL: "Zirconium-Metalloporphyrin PCN-222: Mesoporous Metal-Organic Frameworks with Ultrahigh Stability as Biomimetic Catalysts", ANGEWANDTE CHEMIE INTERNATIONAL EDITION, vol. 51, no. 41, 21 August 2012 (2012-08-21), pages 10307-10310, XP055539193, ISSN: 1433-7851, DOI: 10.1002/anie.201204475
- HOYOUNG D. PARK ET AL: "Heterogeneous Epoxide Carbonylation by Cooperative Ion-Pair Catalysis in Co(CO)4- -Incorporated Cr-MIL-101", ACS CENTRAL SCIENCE, vol. 3, no. 5, 21 March 2017 (2017-03-21), pages 444-448, XP055501942, ISSN: 2374-7943, DOI: 10.1021/acscentsci.7b00075
- LEE et al.: "Light-Harvesting Metal-Organic Frameworks (MOFs): Efficient Strut-to-Strut Energy Transfer in Biodipy and Porphyrin-based MOFs", J. Am. Chem. Soc ., vol. 133, 12 October 2011 (2011-10-12), pages 15858-15861, XP055682679,
- RAJENDIRAN et al.: "A Covalent Triazine Framework-based heterogenized Al-Co bimetallic Catalyst for the ring-expansion carbonylation of epoxide to beta-lactone", RSC Adv., vol. 7, 2017, pages 4635-4638, XP055512948, DOI: 10.1039/C6RA26828E
- ENDISCH et al.: "Beta-Tetraethyl-Beta-tetrapyridin-4-yl Porphyrins, Their N-Methylated Tetracations, and Heterodimers with ms-Tetraphenylsulfonato Porphyrins", J. Am. Chem. Soc., vol. 118, no. 28, 17 July 1996 (1996-07-17), pages 6671-6680, XP055682683,
- ROBERTS et al.: "Urea Metal-Organic Frameworks as Effective and Size-Selective Hydrogen- Bond Catalysts", J. Am. Chem. Soc., vol. 134, no. 7, 8 February 2012 (2012-02-08), pages 3334-3337, XP055682684,
- TROTT et al.: "Catalysts for CO2/Epoxide Ring-Opening Polymerization", Phil. Trans. R. Soc, vol. A374, no. 2061, 28 February 2016 (2016-02-28), pages 1-19, XP055682690,

## Description

### FIELD

The present disclosure relates generally to systems and methods for producing beta-lactones from carbonylation of epoxides, and more specifically to the use of metal-organic framework (also referred to as "MOF") catalysts in such systems and methods. The beta-lactones, such as beta-propiolactone, may be used to produce polypropiolactone and acrylic acid.

### BACKGROUND

Polypropiolactone is a biodegradable polymer that can be used in many packaging and thermoplastic applications. Polypropiolactone is also a useful precursor for the production of acrylic acid. Polypropiolactone may serve as a precursor for acrylic acid, which is in high demand for the production of polyacrylic acid-based superabsorbent polymers, detergent co-builders, dispersants, flocculants and thickeners. One advantage of polypropiolactone is that it can be safely transported and stored for extended periods of time without the safety or quality concerns associated with shipping and storing acrylic acid. There additionally is interest in acrylic acid which can be produced from biomass-derived feedstock, petroleum-derived feedstock, or combinations thereof. Given the size of the acrylic acid market and the importance of downstream applications of acrylic acid, there is a need for industrial systems and methods to produce acrylic acid and precursors thereof. Hoyoung Park ET AL: "Heterogeneous Epoxide Carbonylation by Cooperative Ion-Pair Catalysis in Co(CO)4- -Incorporated Cr-MIL-101", ACS Central Science, vol. 3, no. 5, 21 March 2017, pages 444-448, discloses the preparation of a heterogeneous catalyst for ring-expansion carbonylation of epoxides by post-modification of Cr-MIL-101 framework upon soaking it in a solution of NaCo(CO)4).

### BRIEF SUMMARY

Provided herein are methods and systems for producing beta-lactone products from carbonylating epoxides in the presence of metal-organic framework (also referred to as "MOF") catalysts. Such beta-lactone products, such as beta-propiolactone, may be converted into useful downstream products, such as acrylic acid.

The invention is disclosed in and by the appended claims. In some aspects, provided is a metal-organic framework made up of repeating cores, wherein the cores comprise a linker coordinated to a secondary building unit through O-M²-O bonds. The metal-organic framework also has a plurality of pores, in which a cobalt carbonyl moiety occupies at least a portion of the plurality of pores.

In some variations, the linker is: 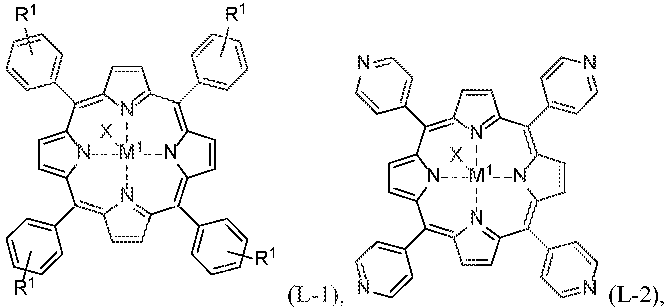 or 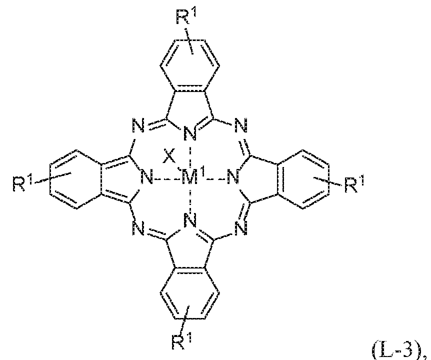 wherein:
M¹ is a metal atom,
X is halo or tetrahydrofuran, and
R¹ is -COOH.

In other variations, M² is zinc or zirconium.

In some aspects, provided is a method to produce a metal-organic framework, comprising: solvothermally reacting a linker with a metal salt in an amine-based solvent to produce a metal-organic framework; and soaking the metal-organic framework in a cobalt solution. Any of the linkers described above and herein may be used. In some embodiments, the metal salt is M²Y₂, wherein M² is zinc or zirconium, and Y is nitrate, halo, or acetate.

In certain embodiments, the solvothermal reaction comprises: mixing the linker with the metal salt in the amine-based solvent to produce a reaction mixture; and heating the reaction mixture to a suitable temperature to produce the metal-organic framework. In one variation, the temperature is between 80 °C and 140 °C.

In some variations, provided is a method to produce a metal-organic framework, comprising, comprising: combining the linker, the metal salt, the cobalt solution, and the amine-based solvent, as described above and herein, to produce the metal-organic framework.

In other aspects, provided is a metal-organic framework produced according to any of the methods described herein.

In yet other aspects, not according to present invention, provided is a method, comprising reacting an epoxide with carbon monoxide in the presence of a catalyst to produce a beta-lactone product. In some embodiments, provided is a method, comprising: reacting an epoxide with carbon monoxide in the presence of a catalyst and a solvent to produce a product stream, which comprises a beta-lactone product and the solvent; and purifying the product stream by distillation to separate the product stream into a solvent recycle stream and a purified beta-lactone stream. The solvent recycle stream comprises the solvent, and the purified beta-lactone stream comprises the beta-lactone product. In the foregoing methods, the catalyst comprises any of the metal-organic frameworks as described herein.

In certain aspects, provided is also a system, not according to present invention, comprising: a beta-lactone production system and a beta-lactone purification system. In some embodiments, the beta-lactone production system comprises: a carbon monoxide source; an epoxide source; a solvent source; a carbonylation reactor, such as a fixed or fluid bed reactor, that contains a catalyst comprising any of the metal-organic frameworks described herein. The reactor also has at least one inlet to receive carbon monoxide from the carbon monoxide source, epoxide from the epoxide source, and solvent from the solvent source, and an outlet to output a beta-lactone stream, wherein the beta-lactone stream comprises a beta-lactone product and solvent. In some embodiments, the beta-lactone purification system comprises: at least one distillation column configured to receive the beta-lactone stream from the carbonylation reactor, and to separate the beta-lactone stream into a solvent recycle stream and a purified beta-lactone stream.

In one variation of the method and system described above and herein, the epoxide is ethylene oxide, and the beta-lactone product is beta-propiolactone.

### DESCRIPTION OF THE FIGURES

The present application can be best understood by reference to the following description taken in conjunction with the accompanying figures, in which like parts may be referred to by like numerals.
FIG. **1** depicts one exemplary general reaction scheme to produce acrylic acid from ethylene oxide and carbon monoxide.

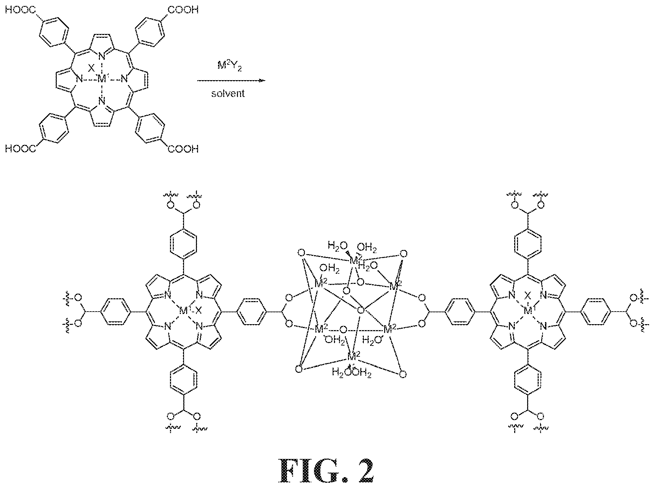

FIG. **2** depicts an exemplary scheme to produce a metal-organic framework as described herein. It should be understood that the metal-organic framework depicted in this scheme shows the repeating unit, where 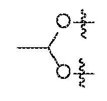 denotes connection to the secondary building unit, which is a metal-oxocluster in this instance. In other words, it should be understood that the exemplary metal-organic framework produced can be either two-dimensional or three-dimensional, with repeating units of the porphyrin linker connected with the secondary building units.
FIG. **3** is a schematic illustration of a system to produce acrylic acid from carbon monoxide and ethylene oxide.
FIG. **4** is a schematic illustration of the unit operations to produce polypropiolactone from beta-propiolactone, and acrylic acid from polypropiolactone.
FIG. **5A** is a schematic illustration of a system for converting beta-propiolactone to polypropiolactone that involves the use of two continuous stirred-tank reactors in series.
FIG. **5B** is a schematic illustration of a system for converting beta-propiolactone to polypropiolactone that involves the use of two loop reactors in series.
FIG. **6** is a schematic illustration of a system for converting beta-propiolactone to polypropiolactone that involves a plug flow reactor with multiple cooling zones.
FIGS. **7-14** depict various configurations of production systems to produce acrylic acid from ethylene oxide and carbon monoxide, via the production of beta-propiolactone and polypropiolactone.
FIG. **15** illustrates an embodiment of an acrylic acid production system described herein.
FIG. **16** illustrates an embodiment of a carbonylation reaction system described herein.
FIG. **17** illustrates an embodiment of a BPL purification system described herein.

### DETAILED DESCRIPTION

The present invention is disclosed in and by the appended claims. The following description sets forth exemplary methods, parameters and the like. It should be recognized, however, that such description is not intended as a limitation on the scope of the present disclosure but is instead provided as a description of exemplary embodiments.

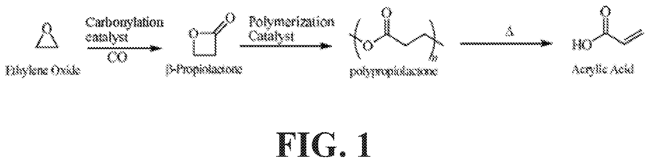

Organic acids, such as acrylic acid, may be produced by conversion of a beta-lactone and/or thermal decomposition of a polylactone comprising beta-lactone monomers. Such beta-lactone may be produced by carbonylation of an epoxide (*e.g.,* in the presence of carbon monoxide). For example, in one aspect, acrylic acid can be produced from ethylene oxide and carbon monoxide according to the following exemplary general reaction scheme depicted in FIG. **1****.** Ethylene oxide ("EO") may undergo a carbonylation reaction, *e.g*., with carbon monoxide ("CO"), in the presence of a carbonylation catalyst to produce beta-propiolactone ("BPL"). The beta-propiolactone may undergo polymerization in the presence of a polymerization catalyst to produce polypropiolactone ("PPL"). The polypropiolactone may undergo thermolysis to produce acrylic acid ("AA").

With respect to the carbonylation of epoxides, provided herein are metal-organic frameworks (also referred to as "MOFs") suitable for use as a heterogeneous carbonylation catalysts. In some aspects, provided is a method comprising reacting an epoxide with carbon monoxide in the presence of a catalyst to produce a beta-lactone, wherein the catalyst comprises any of the metal-organic frameworks described herein.

Such heterogeneous catalysts may be used in a fixed or fluid bed reactor to produce the BPL. The resulting BPL product stream generally does not need to be further purified to separate residual carbonylation catalyst, and the catalyst consumption is generally lower than when homogeneous catalysts are used. For example, when a homogeneous carbonylation catalyst is used, the BPL product stream may undergo nanofiltration to separate residual carbonylation catalyst present, and such separated carbonylation catalyst may be recycled for use in the carbonylation reactor. Such nanofiltration step can be avoided when the metal-organic frameworks described herein are used as the carbonylation catalysts.

Thus, in other aspects, provided is a method comprising reacting an epoxide with carbon monoxide in the presence of a catalyst and a solvent to produce a product stream. The catalyst comprises any of the metal-organic frameworks described herein. The product stream comprises BPL and the solvent. The method further comprises purifying such product stream by distillation to separate the product stream into a solvent recycle stream and a purified BPL stream.

The metal-organic frameworks, methods of making them, as well as methods of using them are described in further detail below.

### Metal-organic frameworks

In some aspects, provided are metal-organic frameworks suitable for use as catalysts for the carbonylation of an epoxide. In certain aspects, provided is a metal-organic framework comprising repeating cores made up of a linker coordinated to a secondary building unit through metal-oxygen-metal bonds. In some variations, the secondary building unit is a metal-oxocluster.

In one aspect, provided is a metal-organic framework made up of repeating cores, wherein the cores comprise a linker coordinated to a secondary building unit through O-M²-O bonds. In one variation, M² is zinc or zirconium. The metal-organic framework has a plurality of pores, and wherein a cobalt carbonyl moiety occupies at least a portion of the plurality of pores.

In some embodiments of the foregoing, the linker is: 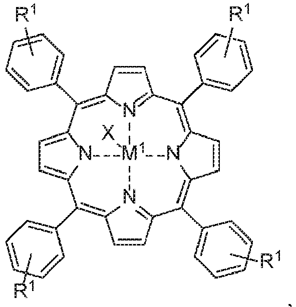 wherein:
M¹ is a metal atom,
X is halo or tetrahydrofuran, and
R¹ is COOH.

In one variation of such linker, the R¹ moiety is in the para-position, and the linker is:

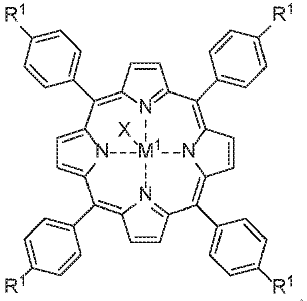

In other embodiments, the linker is: 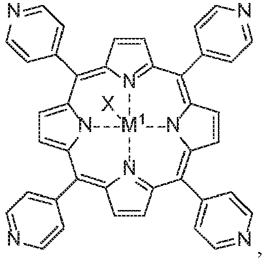 wherein:
M¹ is a metal atom, and
X is halo or tetrahydrofuran.

In yet other embodiments, the linker is: 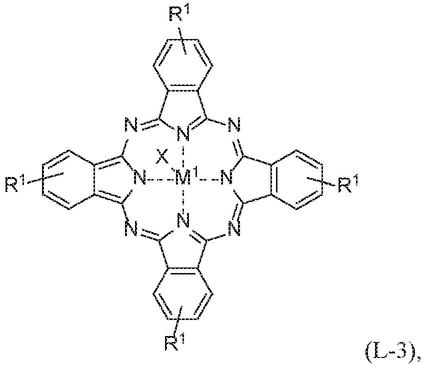 wherein:
M¹ is a metal atom,
X is halo or tetrahydrofuran, and
R¹ is -COOH.

In some variations of the foregoing, M¹ is zinc, copper, manganese, cobalt, ruthenium, iron, rhenium, nickel, palladium, magnesium, aluminum, chromium, titanium, indium, or galladium. In certain variations, M¹ is Zn(II), Cu(II), Mn(II), Co(II), Ru(II), Fe(III), Co(II), Rh(II), Ni(II), Pd(II), Mg(II), Al(III), Cr(III), Cr(IV), Ti(IV), Fe(III), Co(III), Ti(III), In(III), Ga(III), or Mn(III). In one variation, M¹ is aluminum.

In some variations of the foregoing, X is halo. In one variation, X is chloro. In other variations, X is tetrahydrofuran.

In other embodiments, the metal-organic framework may be doped with copper or nickel, or a combination thereof, at the M² site.

In yet other embodiments, the cobalt carbonyl moiety is Co(CO)₄⁻ or (Co₂(CO)₆⁻.

### Methods of Producing the Metal-Organic Frameworks

Provided are also methods of producing the metal-organic frameworks described herein. With reference to FIG. **2****,** an exemplary scheme to produce a porphyrin metal-organic framework is depicted. In this exemplary scheme, the metal-organic framework is assembled using a porphyrin linker in a linker-metal-linker fashion with a M²-oxocluster, where each M² contains six zinc or zirconium ions bound to one another through O-M²-O bonds, with H₂O ions attached at the remaining open sites on the cluster. The linker that makes up part of the framework may be metallated prior to formation of the metal-organic framework, or the metal-organic framework may be formed first and then the linker is post-synthetically modified with M¹.

In one aspect, provided is a method to produce the metal-organic frameworks described herein, comprising: solvothermally reacting any linkers described herein with a metal salt in an amine-based solvent to produce the metal-organic framework; and soaking the metal-organic framework in a cobalt solution to incorporate a cobalt carbonyl moiety in at least a portion of the pores in the metal-organic framework. In some embodiments, the solvothermal reaction comprises: mixing the linker with the metal salt in the amine-based solvent to produce a reaction mixture; and heating the reaction mixture to produce the metal-organic framework.

In another aspect, provided is a method to produce the metal-organic frameworks described herein, comprising: combining any linkers described herein, a metal salt, a cobalt solution, and an amine-based solvent to produce the metal-organic framework, wherein a cobalt carbonyl moiety occupies at least a portion of the plurality of pores in the metal-organic framework.

In some variations of the foregoing, the solvothermal reaction occurs at, or the reaction mixture is heated to, a temperature between 80 °C and 140 °C.

In other variations of the foregoing, the metal salt is M²Y₂, wherein M² is zinc or zirconium, and Y is nitrate, halo, or acetate. In one variation, the metal salt is Zn(NO₃)₂, ZrCl₄, or Zn(OAc)₂.

In one variation, the metal-organic framework may be doped at the M² site with copper and/or nickel.

In yet other variations of the foregoing, the amine-based solvent is a dialkylformamide solvent. In one variation, the amine-based solvent is dimethylformamide or diethylformamide.

In some variations of the foregoing, the cobalt solution comprises cobalt hydroxide, or a salt thereof. In certain variations, the cobalt hydroxide is Co₂(CO)₈ or Co₄(CO)₁₂. In other variations, the salt of the cobalt hydroxide is sodium cobaltate.

The linkers used may be obtained from any commercially available source or produced according to the methods described herein. For example, the following linker, 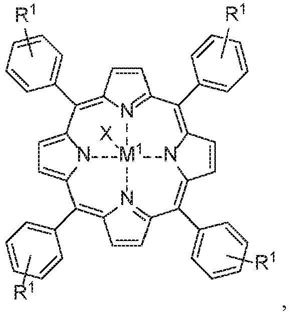 may be obtained by hydrolyzing a linker precursor to produce the linker. In some embodiments, the precursor of this linker is 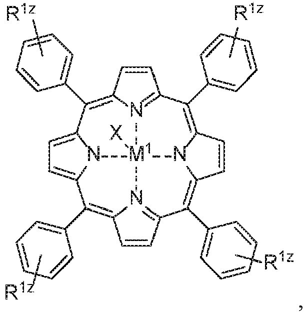 wherein: R^{1z} is -COOR^{z}, wherein R^{z} is alkyl, and X and M¹ are as defined above for the linker. With respect to this exemplary linker precursor, in some variations, R^{z} is methyl or ethyl. In other variations, the hydrolysis of the linker precursor comprises combining the linker precursor with a base, an alcohol, water and a solvent. In one variation, the base may be a hydroxide salt, such as sodium hydroxide or potassium hydroxide, or a combination thereof. In one variation, the alcohol may be methanol or ethanol, or a combination thereof. In another variation, the solvent may include tetrahydrofuran.

### Uses of the Metal-Organic Frameworks

The metal-organic frameworks described herein may be used as catalysts in carbonylation reactions. In certain embodiments, carbonylation of an epoxide of formula 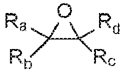 produces a beta-lactone of formula

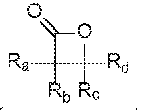

In certain embodiments, each Rₐ, R_{b}, R_{c}, and R_{d} is independently H, optionally substituted alkyl, optionally substituted alkenyl, optionally substituted cycloalkyl, or optionally substituted aryl. It should be understood that the epoxides and beta-lactones may have asymmetric centers, and exist in different enantiomeric or diastereomeric forms. All optical isomers and stereoisomers of the compounds of the general formula, and mixtures thereof in any ratio, are considered within the scope of the formula. Thus, any formula provided herein may include (as the case may be) a racemate, one or more enantiomeric forms, one or more diastereomeric forms, one or more atropisomeric forms, and mixtures thereof in any ratio.

"Alkyl" refers to a monoradical unbranched or branched saturated hydrocarbon chain. In some embodiments, alkyl has 1 to 10 carbon atoms (*i.e*., C₁₋₁₀ alkyl), 1 to 9 carbon atoms (*i.e*., C₁₋₉ alkyl), 1 to 8 carbon atoms (*i.e.,* C₁₋₈ alkyl), 1 to 7 carbon atoms (*i.e.,* C₁₋₇ alkyl), 1 to 6 carbon atoms (*i.e.,* C₁₋₆ alkyl), 1 to 5 carbon atoms (*i.e.,* C₁₋₅ alkyl), 1 to 4 carbon atoms (*i.e*., C₁₋₄ alkyl), 1 to 3 carbon atoms (*i.e.,* C₁₋₃ alkyl), or 1 to 2 carbon atoms (*i.e.,* C₁₋₂ alkyl). Examples of alkyl include methyl, ethyl, propyl, isopropyl, n-butyl, sec-butyl, tert-butyl, pentyl, 2-pentyl, isopentyl, neopentyl, hexyl, 2-hexyl, 3-hexyl, 3-methylpentyl, and the like. When an alkyl residue having a specific number of carbon atoms is named, all geometric isomers having that number of carbon atoms may be encompassed; thus, for example, "butyl" can include n-butyl, sec-butyl, isobutyl and t-butyl; "propyl" can include n-propyl and isopropyl.

"Alkenyl" refers to an unsaturated linear or branched monovalent hydrocarbon chain or combination thereof, having at least one site of olefinic unsaturation (*i.e.*, having at least one moiety of the formula C=C). In some embodiments, alkenyl has 2 to 10 carbon atoms (*i.e*., C₂₋₁₀ alkenyl). The alkenyl group may be in "cis" or "trans" configurations, or alternatively in "E" or "Z" configurations. Examples of alkenyl include ethenyl, allyl, prop-1-enyl, prop-2-enyl, 2-methylprop-1-enyl, but-1 -enyl, but-2-enyl, but-3-enyl, isomers thereof, and the like.

"Cycloalkyl" refers to a carbocyclic non-aromatic group that is connected via a ring carbon atom. Examples of cycloalkyl include cyclopropyl, cyclobutyl, cyclopentyl, cyclohexyl, and the like.

"Aryl" refers to a monovalent aromatic carbocyclic group of from 6 to 18 annular carbon atoms having a single ring or a ring system having multiple condensed rings. Examples of aryl include phenyl, naphthyl and the like.

The term "optionally substituted" means that the specified group is unsubstituted or substituted by one or more substituent groups. Examples of substituents may include halo, - OSO₂R₂, -OSiR₄, -OR, C=CR₂, -R, -OC(O)R, -C(O)OR, and -C(O)NR₂, wherein R is independently H, optionally substituted alkyl, optionally substituted alkenyl, or optionally substituted aryl. In some embodiments, R is independently unsubstituted alkyl, unsubstituted alkenyl, or unsubstituted aryl. In some embodiments, R is independently H, methyl (Me), ethyl (Et), propyl (Pr), butyl (Bu), benzyl (Bn), allyl, phenyl (Ph), or a haloalkyl. In certain embodiments, substituents may include F, Cl, -OSO₂Me, -OTBS (where "TBS" is tert-butyl(dimethyl)silyl)), -OMOM (where "MOM" is methoxymethyl acetal), -OMe, -OEt, -O*i*Pr, - OPh, -OCH₂CHCH₂, -OBn, -OCH₂(furyl), -OCF₂CHF₂, -C=CH₂, -OC(O)Me, -OC(O)nPr, - OC(O)Ph, -OC(O)C(Me)CH₂, -C(O)OMe, -C(O)O*n*Pr, -C(O)NMe₂, -CN, -Ph, -C₆F₅, - C₆H₄OMe, and -OH.

In one variation, three of Rₐ, R_{b}, R_{c}, and R_{d} are H, and the remaining Rₐ, R_{b}, R_{c}, and R_{d} is optionally substituted alkyl, optionally substituted alkenyl, optionally substituted cycloalkyl, or optionally substituted aryl. In one variation, three of Rₐ, R_{b}, R_{c}, and R_{d} are H, and the remaining Rₐ, R_{b}, R_{c}, and R_{d} is unsubstituted alkyl, or alkyl substituted with a substituent selected from the group consisting of halo, -OSO₂R₂, -OSiR₄, -OR, C=CR₂, -R, -OC(O)R, - C(O)OR, and -C(O)NR₂, wherein R is independently H, Me, Et, Pr, Bu, Bn, allyl, and Ph.

In one variation, two of Rₐ, R_{b}, R_{c}, and R_{d} are H, and the remaining two of Rₐ, R_{b}, R_{c}, and R_{d} are optionally substituted alkyl. In one variation, two of Rₐ, R_{b}, R_{c}, and R_{d} are H, one of the remaining Rₐ, R_{b}, R_{c}, and R_{d} is optionally substituted alkyl, and one of the remaining Rₐ, R_{b}, R_{c}, and R_{d} is optionally substituted aryl. In one variation, two of Rₐ, R_{b}, R_{c}, and R_{d} are H, one of the remaining Rₐ, R_{b}, R_{c}, and R_{d} is optionally substituted alkyl, and one of the remaining Rₐ, R_{b}, R_{c}, and R_{d} is optionally substituted alkenyl. In one variation, two of Rₐ, R_{b}, R_{c}, and R_{d} are H, one of the remaining Rₐ, R_{b}, R_{c}, and R_{d} is optionally substituted alkyl, and one of the remaining Rₐ, R_{b}, R_{c}, and R_{d} is optionally substituted cycloalkyl. In one variation, two of Rₐ, R_{b}, R_{c}, and R_{d} are H, one of the remaining Rₐ, R_{b}, R_{c}, and R_{d} is optionally substituted alkenyl, and one of the remaining Rₐ, R_{b}, R_{c}, and R_{d} is optionally substituted aryl.

In certain embodiments, Rₐ, R_{b}, R_{c}, and R_{d} are H. In certain embodiments, Rₐ, R_{b}, and R_{c} are H, and R_{d} is optionally substituted alkyl. In certain embodiments, R_{d}, R_{b}, and R_{c} are H, and Rₐ is optionally substituted alkyl. In certain embodiments, Rₐ, R_{b}, and R_{c} are H, and R_{d} is optionally substituted alkenyl. In certain embodiments, R_{d}, R_{b}, and R_{c} are H, and Rₐ is optionally substituted alkenyl. In certain embodiments, Rₐ, R_{b}, and R_{c} are H, and R_{d} is optionally substituted cycloalkyl. In certain embodiments, R_{d}, R_{b}, and R_{c} are H, and Rₐ is optionally substituted cycloalkyl. In certain embodiments, Rₐ, R_{b}, and R_{c} are H, and R_{d} is optionally substituted aryl. In certain embodiments, R_{d}, R_{b}, and R_{c} are H, and Rₐ is optionally substituted aryl.

In certain embodiments, Rₐ and R_{b} are optionally substituted alkyl, and R_{c} and R_{d} are H. In certain embodiments, R_{c} and R_{d} are optionally substituted alkyl, and Rₐ and R_{b} are H. In certain embodiments, Rₐ and R_{b} are taken together to form an optionally substituted ring. In certain embodiments, R_{c} and R_{d} are taken together to form an optionally substituted ring. In certain embodiments, the optionally substituted ring is a carbocyclic non-aromatic ring containing from 3 to 10 carbon atoms. In certain embodiments, the carbocyclic non-aromatic ring contains at least one site of olefinic unsaturation.

In certain embodiments, Rₐ and R_{d} are taken together to form an optionally substituted ring. In certain embodiments, the optionally substituted ring is a carbocyclic non-aromatic ring containing from 3 to 10 carbon atoms. In certain embodiments, the carbocyclic non-aromatic ring contains at least one site of olefinic unsaturation.

In certain embodiments, Rₐ and R_{d} are each independently optionally substituted alkyl, and R_{b} and R_{c} are H. In certain embodiments, Rₐ is optionally substituted alkyl, R_{d} is optionally substituted aryl, and R_{b} and R_{c} are H. In certain embodiments, R_{d} is optionally substituted alkyl, Rₐ is optionally substituted aryl, and R_{b} and R_{c} are H. In certain embodiments, Rₐ is optionally substituted alkenyl, R_{d} is optionally substituted aryl, and R_{b} and R_{c} are H. In certain embodiments, R_{d} is optionally substituted alkenyl, Rₐ is optionally substituted aryl, and R_{b} and R_{c} are H. In certain embodiments, Rₐ is optionally substituted alkyl, R_{d} is optionally substituted alkenyl, and R_{b} and R_{c} are H. In certain embodiments, R_{d} is optionally substituted alkyl, Rₐ is optionally substituted alkenyl, and R_{b} and R_{c} are H.

In certain embodiments, the metal-organic frameworks described herein may be used as catalysts in the carbonylation of an epoxide from Column A of Table A below to produce the respective beta-lactone from Column B.

**Table A.**

| **Column A** | **Column B** |
|---|---|
| 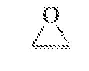 | 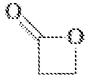 |
| 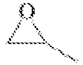 | 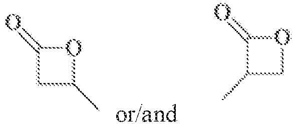 |
| 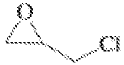 | 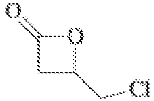 |
| 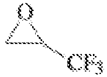 | 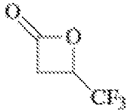 |
| 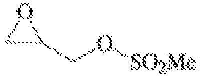 | 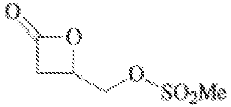 |
| 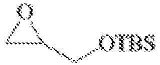 | 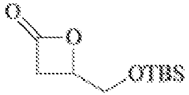 |
| 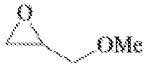 | 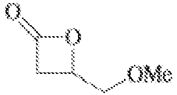 |
| 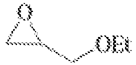 | 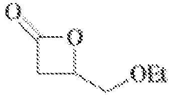 |
| 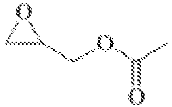 | 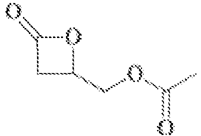 |
| 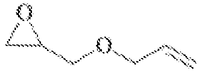 | 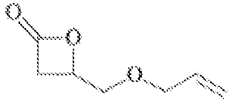 |
| 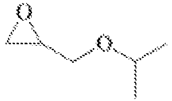 | 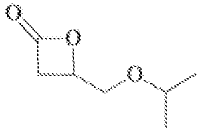 |
| 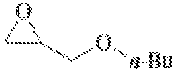 | 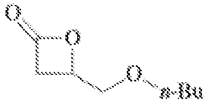 |
| 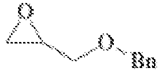 | 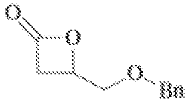 |
| 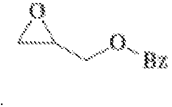 | 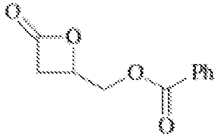 |
| 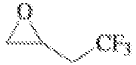 | 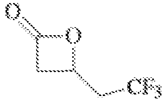 |
| 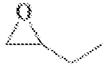 | 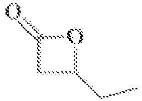 |
| 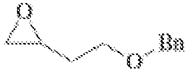 | 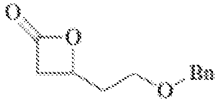 |
| 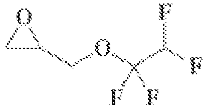 | 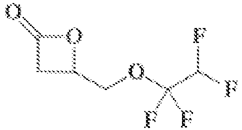 |
| 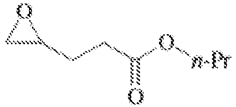 | 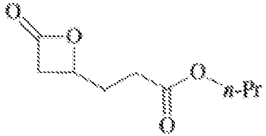 |
| 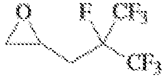 | 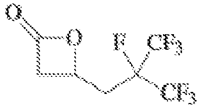 |
| 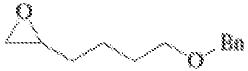 | 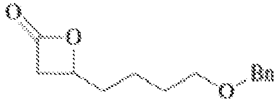 |
| 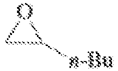 | 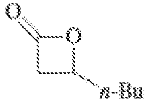 |
| 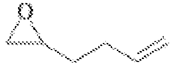 | 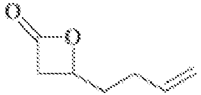 |
| 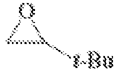 | 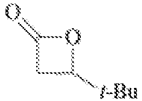 |
| 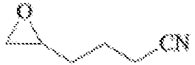 | 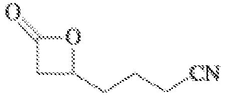 |
| 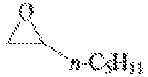 | 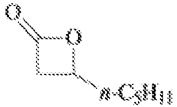 |
| 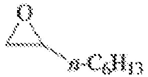 | 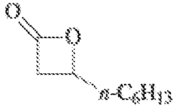 |
| 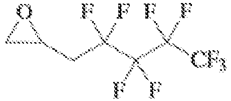 | 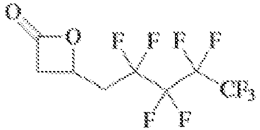 |
| 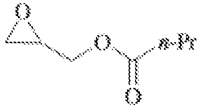 | 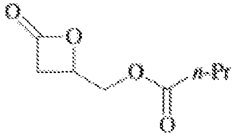 |
| 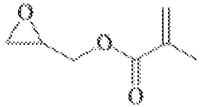 | 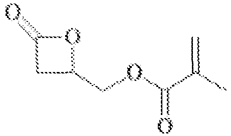 |
| 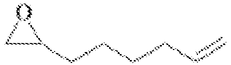 | 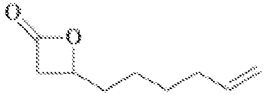 |
| 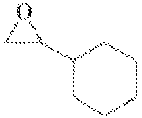 | 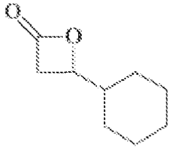 |
| 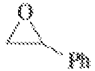 | 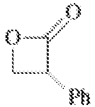 |
| 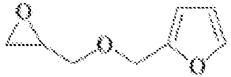 | 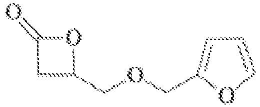 |
| 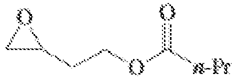 | 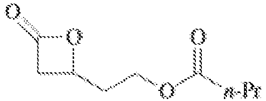 |
| 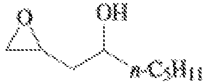 | 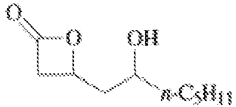 |
| 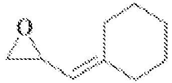 | 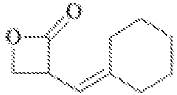 |
| 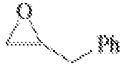 | 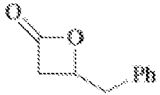 |
| 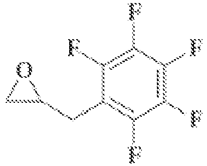 | 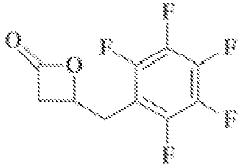 |
| 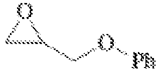 | 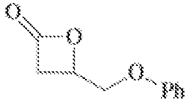 |
| 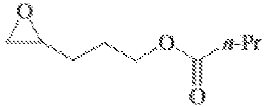 | 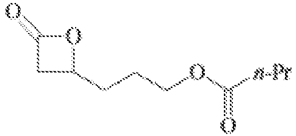 |
| 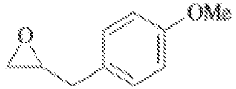 | 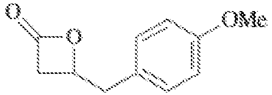 |
| 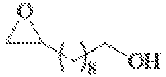 | 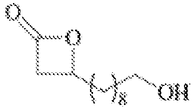 |
| 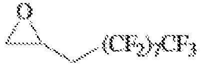 | 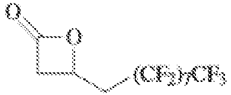 |
| 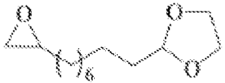 | 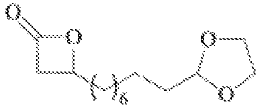 |
| 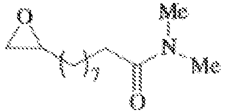 | 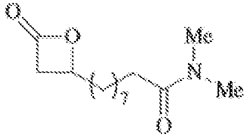 |
| 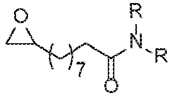 | 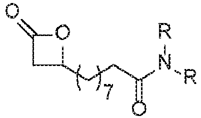 |
| 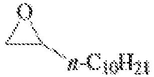 | 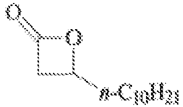 |
| 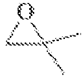 | 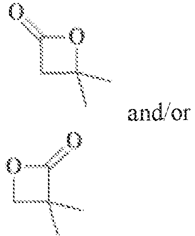 |
| 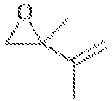 | 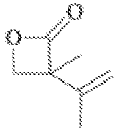 |
| 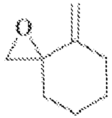 | 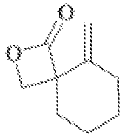 |
| 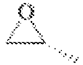 | 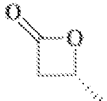 |
| 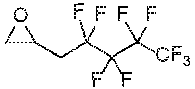 | 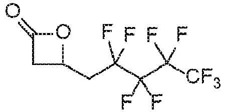 |
| 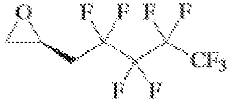 | 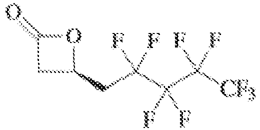 |
| 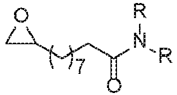 | 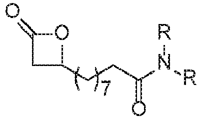 |
| 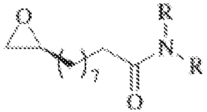 | 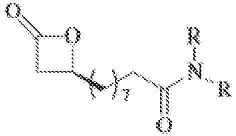 |
| 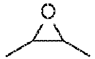 | 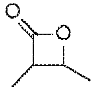 |
| 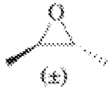 | 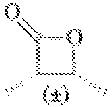 |
| 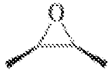 | 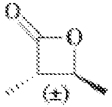 |
| 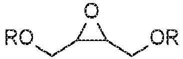 | 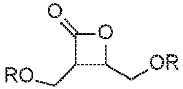 |
| 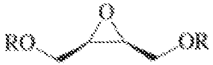 | 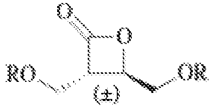 |
| 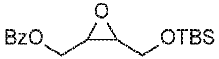 | 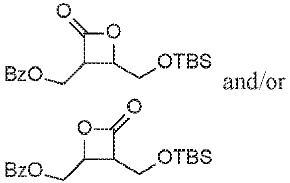 |
| 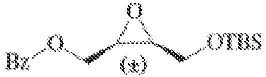 | 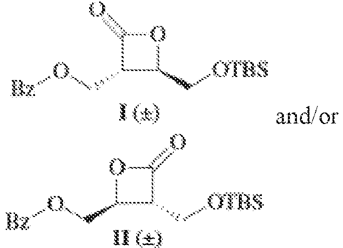 |
| 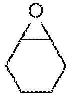 | 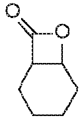 |
| 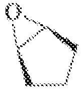 | 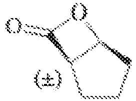 |
| 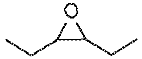 | 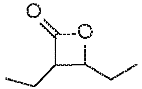 |
| 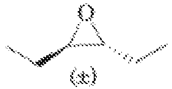 | 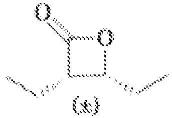 |
| 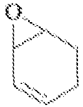 | 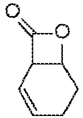 |
| 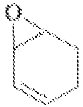 | 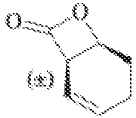 |
| 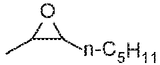 | 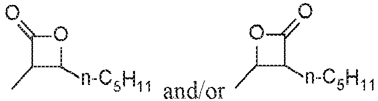 |
| 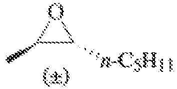 | 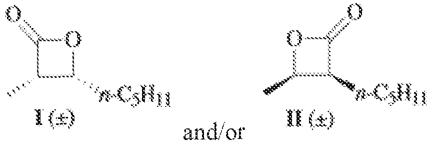 |
| 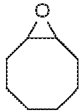 | 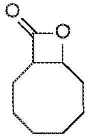 |
| 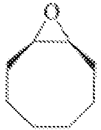 | 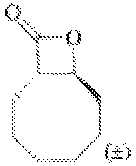 |
| 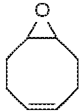 | 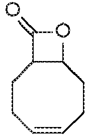 |
| 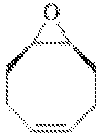 | 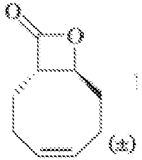 |
| 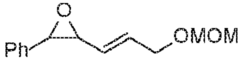 | 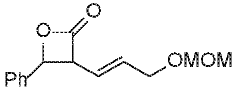 |
| 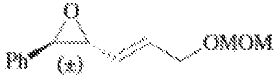 | 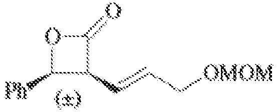 |
| 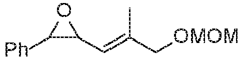 | 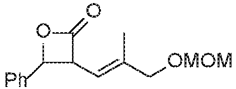 |
| 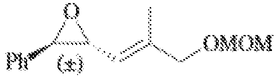 | 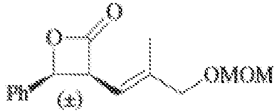 |
| 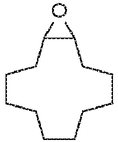 | 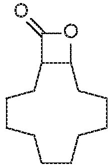 |
| 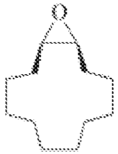 | 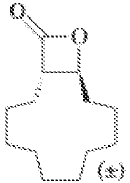 |
| 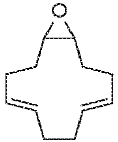 | 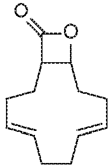 |
| 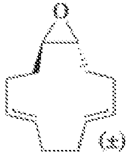 | 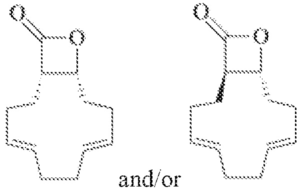 |
| 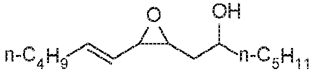 | 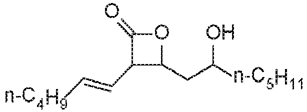 |
| 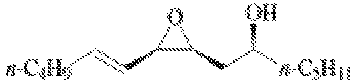 | 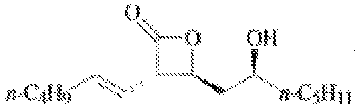 |
| 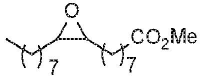 | 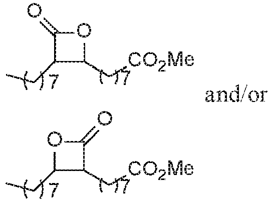 |
| 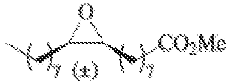 | 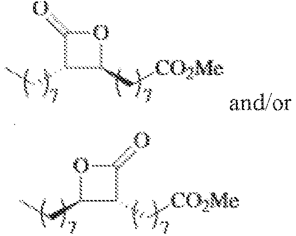 |
| 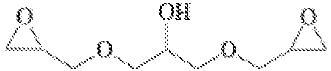 | 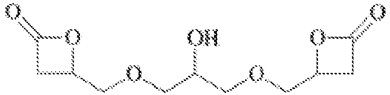 |
| 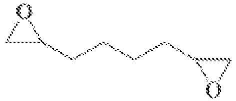 | 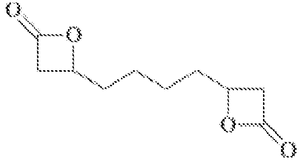 |
| 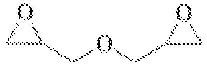 | 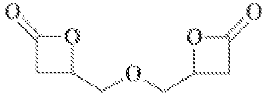 |

In some aspects, not according to present invention, provided is a method comprising reacting an epoxide with carbon monoxide in the presence of a catalyst to produce a beta-lactone product, wherein the catalyst comprises any of the metal-organic frameworks described herein. In some embodiments, provided is a method comprising carbonylating an epoxide in the presence of a catalyst to produce a beta-lactone product, wherein the catalyst comprises any of the metal-organic frameworks described herein. In some variations, the metal-organic frameworks used are single-crystalline materials with a large degree of ordering to help prevent leeching of Co(CO)₄⁻ or Co₂(CO)₆⁻ (as the case may be) from the structure.

In other aspects, not according to present invention, provided is a method, comprising: reacting an epoxide with carbon monoxide in the presence of a catalyst and a solvent to produce a product stream, wherein the catalyst comprises any of the metal-organic frameworks described herein, and wherein the product stream comprises a beta-lactone product and the solvent; and purifying the product stream by distillation to separate the product stream into a solvent recycle stream and a purified beta-lactone stream, wherein the solvent recycle stream comprises the solvent, and wherein the purified beta-lactone stream comprises the beta-lactone product. In some variations, provided is a method, comprising: carbonylating an epoxide in the presence of a catalyst and a solvent to produce a product stream, wherein the catalyst comprises any of the metal-organic frameworks described herein, and wherein the product stream comprises a beta-lactone product and the solvent; and purifying the product stream by distillation to separate the product stream into a solvent recycle stream and a purified beta-lactone stream, wherein the solvent recycle stream comprises the solvent, and wherein the purified beta-lactone stream comprises the beta-lactone product.

In other aspects, not according to present invention, provided is a system comprising:
a beta-lactone production system, comprising:
a carbon monoxide source;
an epoxide source;
optionally a solvent source;
a carbonylation reactor, wherein the carbonylation reactor is a fixed or fluid bed reactor comprising:
   a catalyst comprising any of the metal-organic frameworks described herein,
   at least one inlet to receive carbon monoxide from the carbon monoxide source, epoxide from the epoxide source, and solvent from the solvent source (if present),
   an outlet to output a beta-lactone stream, wherein the beta-lactone stream comprises a beta-lactone product and solvent (if present).

In some variations, a solvent source is not present in the system. In other variations, the solvent source is present in the system.

In yet other aspects, not according to present invention, provided is a system comprising:
a beta-lactone production system, comprising:
   a carbon monoxide source;
   an epoxide source;
   a solvent source;
   a carbonylation reactor, wherein the carbonylation reactor is a fixed or fluid bed reactor comprising:
      a catalyst comprising any of the metal-organic frameworks described herein,
      at least one inlet to receive carbon monoxide from the carbon monoxide source, epoxide from the epoxide source, and solvent from the solvent source, and
      an outlet to output a beta-lactone stream, wherein the beta-lactone stream comprises a beta-lactone product and solvent; and
a beta-lactone purification system, comprising:
   at least one distillation column configured to receive the beta-lactone stream from the carbonylation reactor, and separate the beta-lactone stream into a solvent recycle stream and a purified beta-lactone stream,
   wherein the solvent recycle stream comprises solvent, and
   wherein the purified beta-lactone stream comprises the beta-lactone product.

In one variation of the methods and systems described herein, the epoxide is ethylene oxide, and the beta-lactone product is beta-propiolactone. The beta-propiolactone may be used as a precursor to produce polypropiolactone and/or acrylic acid.

In some variations of the foregoing, provided herein are systems and methods using the metal-organic frameworks described herein for the production of acrylic acid from ethylene oxide and carbon monoxide on an industrial scale. In certain variations, the methods and systems described herein are suitable for the production of acrylic acid on a scale of 25 kilo tons per annum ("KTA"). In some variations, the systems are configured to produce acrylic acid using the metal-organic frameworks described herein in a continuous process, and further feedback loops to continually produce acrylic acid.

Further, in some variations, the systems provided herein further include various purification systems to produce acrylic acid of high purity. For example, the systems provided herein may be configured to remove carbonylation solvent and by-products (e.g., acetaldehyde, succinic anhydride, and acrylic acid dimer level) to achieve acrylic acid with a purity of at least 99.5%, at least 99.6%, at least 99.7%, at least 99.8%, or at least 99.9%.

In other variations, the systems provided herein are also configured to recycle various starting materials and acrylic acid precursors, such as beta-propiolactone. For example, the systems may include one or more recycle systems to isolate unreacted ethylene oxide, unreacted carbon monoxide, and carbonylation solvent.

In yet other variations, the systems provided herein are also configured to manage and integrate heat produced. The carbonylation reaction to produce beta-propiolactone and the polymerization reaction to produce polypropiolactone are exothermic. Thus, the heat generated from the exothermic unit operations, such as the carbonylation reactor and polymerization reactor can be captured and used for cooling in endothermic unit operations, such as the distillation apparatus and thermolysis reactor. For example, in some variations of the methods and systems provided herein, steam may be generated in heat transfer equipment (*e.g*., shell and tube heat exchanger and reactor cooling jacket) via a temperature gradient between process fluid and water/steam. This steam can be used for heat integration between exothermic and endothermic unit operations. In other variations of the systems and methods provided herein, other suitable heat transfer fluids may be used.

In other variations, heat integration may be achieved by combining certain unit operations. For example, heat integration may be achieved by combining polymerization of beta-propiolactone and vaporization of the solvent (*e.g*., THF) from the distillation column within a single unit operation. In such a configuration, the heat liberated from the beta-propiolactone polymerization reaction is used directly to vaporize the solvent in the distillation apparatus, and the output of the unit produces polypropiolactone. In other variations, the heat liberated from the polymerization reaction can be exported to other systems at the same production site.

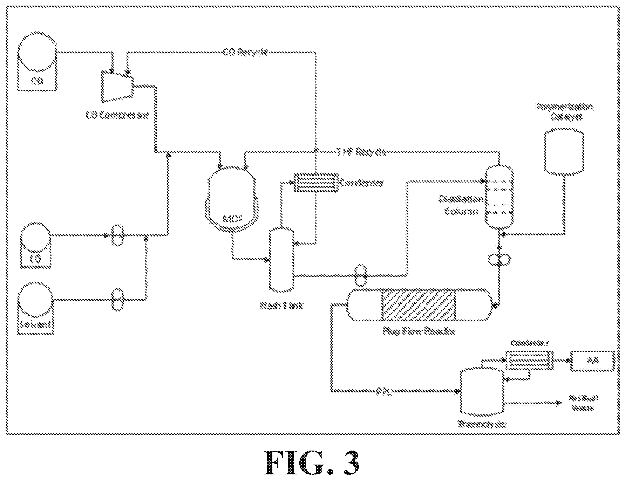

With reference to FIG. 3, an exemplary system to produce acrylic acid from carbon monoxide and ethylene oxide is depicted. Carbon monoxide (CO), ethylene oxide (EO) and carbonylation solvent are fed into a beta-propiolactone production system, as depicted in FIG. **3****.** In some variations, the reactor in the system for producing beta-propiolactone is a fluid or fixed bed reactor. In other variations, the reactor contains a catalyst comprising any of the metal-organic frameworks described herein. Such beta-propiolactone production system is typically configured to produce a liquid product stream of beta-propiolactone. This beta-propiolactone product stream is fed to an EO/CO separator, depicted as the flash tank in FIG. 3, where unreacted ethylene oxide and unreacted carbon monoxide may be separated and recycled for use in the reactor. The beta-propiolactone product stream is then fed from the EO/CO separator to a distillation column in FIG. **3****,** which is configured to separate ethylene oxide, carbon monoxide, and by-products from the solvent recycle stream, which is depicted as a tetrahydrofuran (THF) recycle stream. The system in FIG. **3** depicts the use of THF as the carbonylation solvent, but it should be understood that in other variations, other suitable solvents may be used. The purified beta-propiolactone stream and polymerization catalyst are fed into a polypropiolactone production system, depicted as a plug flow reactor in FIG. **3****.** The polypropiolactone production system is configured to produce a polypropiolactone product stream, which can be fed into a thermolysis reactor to produce acrylic acid.

It should be understood, however, that while FIG. **3** depicts an exemplary acrylic acid production system, variations of this production system are envisioned. It should also be understood that FIG. **3** depicts an exemplary system for producing beta-propiolactone from ethylene oxide, the system may be configured to use other epoxides and produce corresponding beta-lactones as provided in Table A above.

Additionally, in other exemplary embodiments of the systems described herein, various unit operations depicted in FIG. **3** may be combined or omitted. In some variations, polymerization (*e.g*., to form polypropiolactone from beta-propiolactone) and depolymerization (*e.g*., to form acrylic acid from depolymerization of polypropiolactone) may be combined (e.g. by catalytic or reactive distillation) may be combined, or the EO/CO separator may be omitted.

Further, it should be understood that in other exemplary embodiments of systems described herein, additional unit operations may be employed. For example, in some embodiments, one or more heat exchangers may be incorporated into the systems to manage and integrate heat produced in the system.

Provided herein are various systems configured for the commercial production of polypropiolactone and acrylic acid. In some configurations, polypropiolactone and acrylic acid are produced at the same geographical location. In other configurations, polypropiolactone is produced in one location and shipped to a second location where acrylic acid is produced.

In other variations, beta-propiolactone may be polymerized to produce polypropiolactone by way of complete conversion of beta-propiolactone. In such a variation, there may not be a need for additional apparatus in the system to isolate and recycle beta-propiolactone to the polymerization reactor. In other variations, the conversion of beta-propiolactone is not complete. Unreacted beta-propiolactone may be separated from the polypropiolactone product stream and the recovered beta-propiolactone may be recycled back to the polymerization reactor.

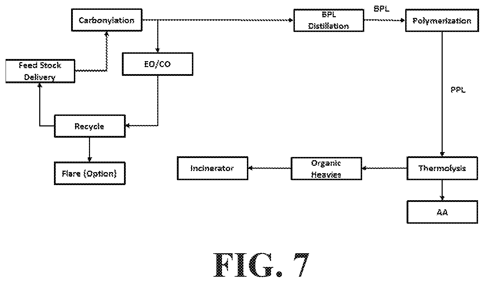

For example, FIG. **7** depicts an exemplary system wherein the PPL product stream and the AA product stream are produced at the same location, and the polypropiolactone production system is configured to achieve complete conversion of BPL to PPL. The BPL production system (labeled 'Carbonylation' in FIG. **7**) typically includes a carbon monoxide (CO) source, an ethylene oxide (EO) source, a solvent source, and a carbonylation reactor which contains the carbonylation catalyst. In certain variations, the carbonylation reactor is configured to receive carbon monoxide (CO), ethylene oxide (EO), and solvent from a CO source, an EO source, and a solvent source (collectively labeled 'Feed Stock Delivery' in FIG. **7**). The carbon monoxide, ethylene oxide, carbonylation solvent, and carbonylation catalyst may be obtained by any commercially available sources, or any commercially available methods and techniques known in the art.

In some variations, the CO, EO, and solvent are essentially water and oxygen free. In one variation, the solvent from the solvent source, the EO from the EO source, and the CO from the CO source have a concentration of water and oxygen less than about 500 ppm, less than about 250 ppm, less than about 100, or less than about 50 ppm.

Any suitable carbonylation solvents may be used. In some embodiments, the carbonylation solvent comprises tetrahydrofuran, hexane, or a combination thereof. In other embodiments, the carbonylation solvent comprises an ether, a hydrocarbon, or a combination thereof. In yet other embodiments, the carbonylation solvent comprises tetrahydrofuran, tetrahydropyran, 2,5-dimethyl tetrahydrofuran, sulfolane, N-methyl pyrrolidone, 1,3 dimethyl-2-imidazolidinone, diglyme, triglyme, tetraglyme, diethylene glycol dibutyl ether, isosorbide ethers, methyl tert-butyl ether, diethylether, diphenyl ether, 1,4-dioxane, ethylene carbonate, propylene carbonate, butylene carbonate, dibasic esters, diethyl ether, acetonitrile, ethyl acetate, propyl acetate, butyl acetate, 2-butanone, cyclohexanone, toluene, difluorobenzene, dimethoxy ethane, acetone, or methylethyl ketone, or any combination thereof. In one variation, the carbonylation solvent comprises tetrahydrofuran.

The carbonylation reactor may be configured to receive EO from the EO source at any rate, temperature, or pressure described herein. Additionally, the carbonylation reactor may be configured to receive CO from the CO source at any rate, temperature, or pressure described herein. The carbonylation reactor may be also configured to receive solvent at any rate, temperature, or pressure described herein.

In some embodiments, the pressure in the carbonylation reactor is about 900 psig, and the temperature is about 70 °C. In certain variations, the reactor is equipped with an external cooler (heat exchanger). In some variations, the carbonylation reaction achieves a selectivity of BPL above 99%.

With reference again to the exemplary system in FIG. **7****,** a beta-propiolactone product stream exits the outlet of the carbonylation reactor. The beta-propiolactone product stream comprises BPL, solvent, unreacted EO and CO, and by-products, such as acetaldehyde byproduct (ACH) and succinic anhydride (SAH). The beta-propiolactone product stream may have any concentration of BPL, solvent, EO, ACH, and SAH described herein.

With reference again to the exemplary system in FIG. **7****,** the beta-propiolactone product stream is output from an outlet of the carbonylation reactor and enters an inlet of the ethylene oxide and carbon monoxide separator (labeled 'EO CO' in FIG. **7**). In one embodiment, the ethylene oxide and carbon monoxide separator is a flash tank. The majority of the ethylene oxide and carbon monoxide is recovered from the carbonylation reaction stream and can be recycled back to the carbonylation reactor as a recycled ethylene oxide stream and a recycled carbon monoxide stream (labeled 'Recycle' in FIG. **7**), or sent for disposal (labeled 'Flare' in FIG. **7**). In some embodiments, at least 10% of the ethylene oxide and 80% of the carbon monoxide in the carbonylation reaction stream is recovered. The recycled carbon monoxide stream can also include unreacted ethylene oxide, secondary reaction product acetaldehyde, BPL, and the remainder solvent.

In some variations, the ethylene oxide and carbon monoxide are disposed of using a method other than flare. For example, in one embodiment, the ethylene oxide and carbon monoxide recovered from the beta-propiolactone product stream are disposed of using incineration.

With reference again to the exemplary system in FIG. **7****,** the beta-propiolactone product stream may enter the inlet of the BPL purification system (labeled 'BPI, Distillation' in FIG. **7**). In one variation, the BPL purification system comprises one or more distillation columns operating at or below atmospheric pressure configured to produce a recovered solvent stream, and a production stream comprising purified BPL. The pressure is selected in such a way to achieve the temperature that reduces the decomposition of BPL. In some embodiments, the one or more distillation columns are operated at a pressure of about 0.15 bara and a temperature between about 90 °C and about 120 °C. In some embodiments, the distillation system is configured to produce a recycled solvent stream essentially free of ethylene oxide, carbon monoxide, acetaldehyde, and succinic anhydride.

With reference again to the exemplary system in FIG. **7****,** the recovered solvent stream exits an outlet of the BPL purification system and may be fed back to the carbonylation reactor. In some variations, the concentration of H₂O and O₂ is reduced in the recycled solvent stream prior to being fed to the carbonylation reactor. The recovered solvent stream may have any concentration of H₂O and O₂ described herein when fed back to the carbonylation reactor. For example, in some embodiments, the concentration of H₂O and O₂ is less than about 500 ppm, less than about 250 ppm, less than about 100 ppm, or less than about 50 ppm when fed back into the carbonylation reactor.

With reference again to the exemplary system in FIG. 7, the production stream comprising purified BPL exits the outlet of the BPL purification system. The production stream is essentially free of solvent, ethylene oxide, carbon monoxide, acetaldehyde, and succinic anhydride. In some embodiments, the remainder of the production stream includes secondary reaction products such as succinic anhydride, and leftover solvent (e.g., THF).

The production stream enters an inlet of the polypropiolactone production system. In the exemplary system depicted in FIG. **7****,** the polypropiolactone production system comprises a polymerization reactor (labeled 'Polymerization' in FIG. 7). The polypropiolactone production system is configured to receive and output streams at any rate, concentration, temperature, or pressure described herein. For example, in one embodiment, the inlet to the polymerization process can include about 2000 kg/hr BPL to about 35000 kg/hr BPL.

With reference again to the exemplary system in FIG. **7****,** the polypropiolactone production system is configured to operate in a continuous mode and achieves complete conversion of BPL in the production stream to PPL. A PPL product stream (labeled 'PPL' in FIG. **7**) exits an outlet of the polypropiolactone production system, and comprises PPL.

With reference again to the exemplary system in FIG. **7****,** the PPL product stream enters an inlet of the thermolysis reactor. The PPL product stream may have any concentration of compounds, temperature, or pressure described herein. A thermolysis reactor is configured to convert the PPL stream to an AA product stream. In some embodiments, the temperature of the thermolysis reactor is between 200 °C and 300°C and the pressure is between 0.2 bara and 5 bara.

Traces of high boiling organic impurities (labeled 'Organic Heavies' in FIG. **7**) are separated from the AA stream, exit an outlet of the thermolysis reactor, and are sent to the incinerator for disposal (labeled 'Incinerator' in FIG. **7**).

An AA product stream exits an outlet of the thermolysis reactor for storage or further processing. The AA product stream comprises essentially pure AA. The AA product stream may exit an outlet of the thermolysis reactor at any rate, concentration, temperature, or pressure described herein. The remainder of the AA product stream can include secondary reaction products such as succinic anhydride or acetaldehyde and left over solvent such as THF. In some embodiments, the AA product stream can have a temperature between about 20 °C to about 60 °C. In some embodiments, the AA product stream can be at a pressure of about 0.5 to about 1.5 bara.

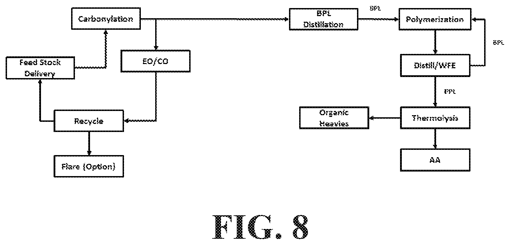

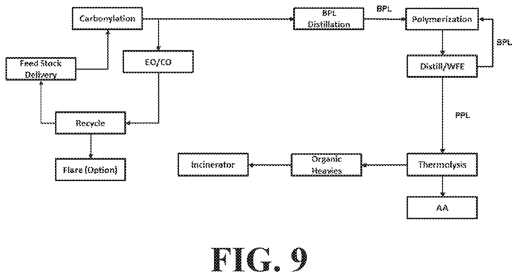

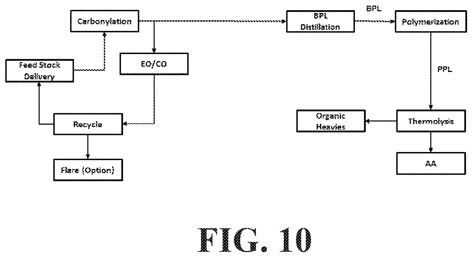

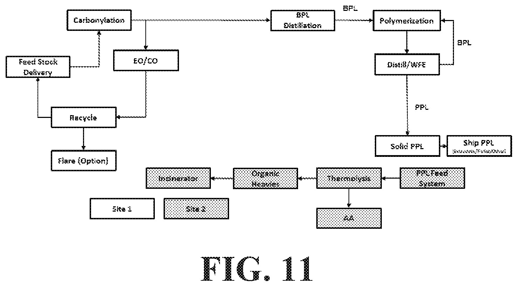

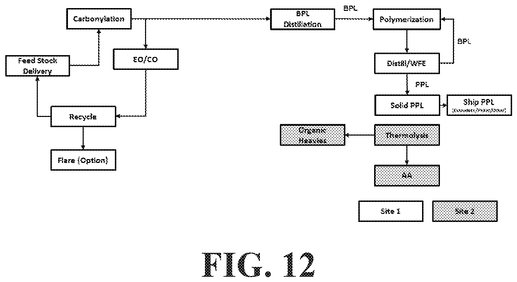

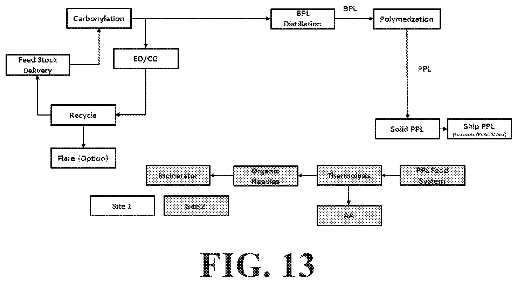

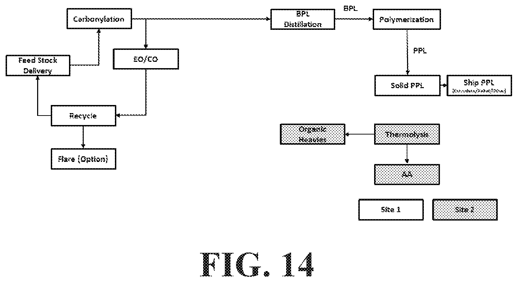

Other variations in the configurations of the systems are provided in FIGS. **8-14****.** Each of the unit operations in the production systems for acrylic acid and precursors thereof are also described in further detail below.

### Beta-lactone Production System (i.e., carbonylation reaction system)

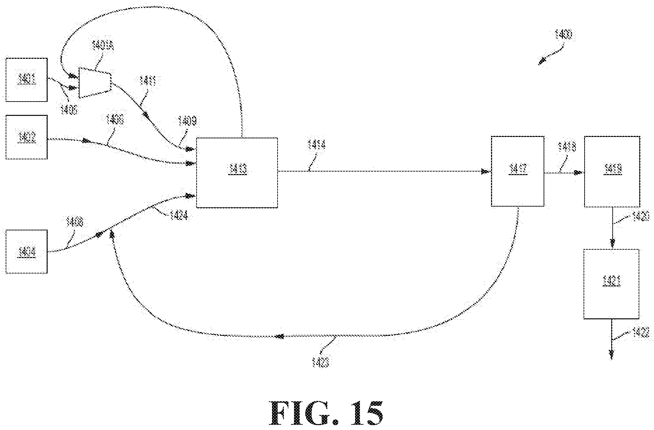

FIG. **15** illustrates an exemplary embodiment of the production system disclosed herein. FIG. **15** contains carbonylation reaction system 1413 (*i.e*., beta-propiolactone production system), BPL purification system 1417, polymerization reaction system 1419, and thermolysis system 1421.

In the carbonylation reaction system, ethylene oxide (an exemplary epoxide) can be converted to beta-propiolactone (an exemplary beta-lactone) by a carbonylation reaction, as depicted in the reaction scheme below.

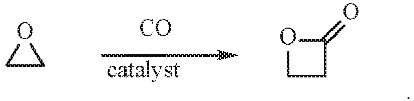

Water and oxygen can damage the carbonylation catalyst. The feed streams (i.e., EO, CO, and optionally solvent) to the carbonylation reaction reactor, which contains the carbonylation catalyst, should be substantially dry (i.e., have a water content below 50 ppm) and be oxygen free (i.e., have an oxygen content below 20 ppm). As such, the feed streams and/or storage tanks and/or feed tank can have sensors on them in order to determine the composition of the stream/tank to make sure that they have a low enough oxygen and water content. In some embodiments, the feed streams can be purified such as by adsorption to reduce the water and oxygen content in the streams fed to the carbonylation reaction system. In some embodiments, prior to running the production system, the tubes, apparatuses, and other flow paths can be purged with an inert gas or carbon monoxide to minimize exposure to oxygen or water in the production system.

FIG. **15** includes ethylene oxide source 1402 that can feed fresh ethylene oxide in ethylene oxide stream 1406 to carbonylation reaction system inlet 1409. Inlet 1409 can be one inlet to the carbonylation reaction system or multiple inlets. Ethylene oxide can be fed as a liquid using a pump or any other means known to those of ordinary skill in the art. In addition, the ethylene oxide source can be maintained under an inert atmosphere.

FIG. **15** also includes solvent source 1404 that can feed solvent to the carbonylation reaction system. The solvent may be selected from any solvents described herein, and mixtures of such solvents. In some variations, the solvent is an organic solvent. In certain variations, the solvent is an aprotic solvent. In some embodiments, the solvent includes dimethylformamide, N-methyl pyrrolidone, tetrahydrofuran, toluene, xylene, diethyl ether, methyl-tert-butyl ether, acetone, methylethyl ketone, methyl-iso-butyl ketone, butyl acetate, ethyl acetate, dichloromethane, and hexane, and mixtures of any two or more of these. In general, polar aprotic solvents or hydrocarbons are suitable for this step.

Additionally, in one variation, beta-lactone may be utilized as a co-solvent. In other variations, the solvent may include ethers, hydrocarbons and non protic polar solvents. In some embodiments, the solvent includes tetrahydrofuran ("THF"), sulfolane, N-methyl pyrrolidone, 1,3 dimethyl-2-imidazolidinone, diglyme, triglyme, tetraglyme, diethylene glycol dibutyl ether, isosorbide ethers, methyl tert-butyl ether, diethylether, diphenyl ether, 1,4-dioxane, ethylene carbonate, propylene carbonate, butylene carbonate, dibasic esters, diethyl ether, acetonitrile, ethyl acetate, dimethoxy ethane, acetone, and methylethyl ketone. In other embodiments, the solvent includes tetrahydrofuran, tetrahydropyran, 2,5-dimethyl tetrahydrofuran, sulfolane, N-methyl pyrrolidone, 1,3 dimethyl-2-imidazolidinone, diglyme, triglyme, tetraglyme, diethylene glycol dibutyl ether, isosorbide ethers, methyl tert-butyl ether, diethylether, diphenyl ether, 1,4-dioxane, ethylene carbonate, propylene carbonate, butylene carbonate, dibasic esters, diethyl ether, acetonitrile, ethyl acetate, propyl acetate, butyl acetate, 2-butanone, cyclohexanone, toluene, difluorobenzene, dimethoxy ethane, acetone, and methylethyl ketone. In certain variations, the solvent is a polar donating solvent. In one variation, the solvent is THF.

Referring again to the exemplary system depicted in FIG. **15****,** in some embodiments, solvent feed 1424 can supply solvent to the carbonylation reaction system inlet 1409. Solvent can be fed to the carbonylation reaction system using a pump. In addition, the solvent streams, sources, storage tanks, etc., can be maintained under an inert or CO atmosphere. In some embodiments, the solvent feed that supplies solvent to the carbonylation reaction system can include solvent 1408 from fresh solvent source 1404, and recycled solvent 1423 from the BPL purification system. In some embodiments, the recycled solvent from the BPL purification system can be stored in a make-up solvent reservoir. In some embodiments, the solvent feed that supplies solvent to the carbonylation reaction system can include solvent from the make-up solvent reservoir. In some embodiments, solvent can be purged from the system. In some embodiments, the purged solvent can be solvent from the recycled solvent of the BPL purification system. In some embodiments, solvent from the fresh solvent source is also stored into the make-up solvent reservoir to dilute the recycled solvent from the BPL purification system with fresh solvent. In some embodiments, fresh solvent is fed from the fresh solvent source to the make-up solvent reservoir prior to entering the carbonylation reaction system. In some embodiments, solvent from the fresh solvent source and the BPL purification system can be purified by operations such as adsorption to remove oxygen and water that can inhibit the carbonylation catalyst. In some embodiments, the amount of oxygen and/or water in all streams entering the carbonylation reaction system is less than about 500 ppm, less than about 250 ppm, less than about 100, less than about 50 ppm, or less than about 20 ppm.

In certain variations, the carbonylation reaction systems and methods for carbonylation described herein do not use a solvent.

The beta-propiolactone production system may further include other feed sources. For example, in one variation, the beta-propiolactone production system further includes a Lewis base additive source.

In some embodiments, a Lewis base additive may be added to the carbonylation reactor. In certain embodiments, such Lewis base additives can stabilize or reduce deactivation of the catalysts. In some embodiments, the Lewis base additive is selected from the group consisting of phosphines, amines, guanidines, amidines, and nitrogen-containing heterocycles. In some embodiments, the Lewis base additive is a hindered amine base. In some embodiments, the Lewis base additive is a 2,6-lutidine; imidazole, 1-methylimidazole, 4-dimethylaminopyridine, trihexylamine and triphenylphosphine.

The exemplary system depicted in FIG. **15** also includes carbonylation product stream 1414, BPL purified stream 1418, PPL product stream 1420, and AA product stream 1422.

In some embodiments, the carbonylation reaction system can include at least one reactor for the carbonylation reaction. In some embodiments, the carbonylation system can include multiple reactors in series and/or parallel for the carbonylation reaction. In some variations, the reactor is a fixed or fluid bed reactor with a heterogeneous catalyst comprising any of the metal-organic frameworks described herein.

All inlets and outlets to the carbonylation reaction system can include sensors that can determine the flow-rate, composition (especially water and/or oxygen content), temperature, pressure, and other variables known to those of ordinary skill in the art. In addition, the sensors can be connected to control units that can control the various streams (i.e., feed controls) in order to adjust the process based on the needs of the process determined by the sensor units. Such control units can adjust the quality as well as the process controls of the system.

In some variations, the reactor in the beta-propiolactone production system is configured to further receive one or more additional components. In certain embodiments, the additional components comprise diluents which do not directly participate in the chemical reactions of ethylene oxide. In certain embodiments, such diluents may include one or more inert gases (e.g., nitrogen, argon, helium and the like) or volatile organic molecules such as hydrocarbons, ethers, and the like. In certain embodiments, the reaction stream may comprise hydrogen, carbon monoxide of carbon dioxide, methane, and other compounds commonly found in industrial carbon monoxide streams. In certain embodiments, such additional components may have a direct or indirect chemical function in one or more of the processes involved in the conversion of ethylene oxide to beta-propiolactone and various end products. Additional reactants can also include mixtures of carbon monoxide and another gas. For example, as noted above, in certain embodiments, carbon monoxide is provided in a mixture with hydrogen (e.g., Syngas).

Because the carbonylation reaction is exothermic, the reactors used can include an external circulation loop for reaction mass cooling. In some embodiments, the reactors can also include internal heat exchangers for cooling. For example, in the case of a shell and tube type reactor, the reactors can flow through the tube part of the reactor and a cooling medium can flow through the shell of the reactor or vice versa. Heat exchanger systems can vary depending on layout, reactor selection, as well as physical location of the reactor. The reactors can employ heat exchangers outside of the reactors in order to do the cooling/heating or the reactors can have an integrated heat exchanger such as a tube and shell reactor. For example, the reactor can utilize a layout for heat rejection by pumping a portion of the reaction fluid through an external heat exchanger. In some embodiments, heat can be removed from the reactor by using a coolant in a reactor jacket, one or more internal cooling coils, lower temperature feeds and/or recycle streams, an external heat exchange with pump around loop, and/or other methods known by those of ordinary skill in the art. In addition, the reactors may have multiple cooling zones with varying heat transfer areas and/or heat transfer fluid temperatures and flows.

In some embodiments, the heat produced in the reaction system can be reduced by adding additional solvent to the reaction system in order to dilute the reactants, decreasing the reactants in the reaction system, and/or decreasing the amount of catalyst in the reaction system.

The type of reactor employed and the type of heat exchanger employed (either external or integrated) can be a function of various chemistry considerations (e.g., reaction conversions, by-products, etc.), degree of exotherm produced, and the mixing requirements for the reaction.

Since carbonylation reactions are exothermic reactions and the BPL purification system and thermolysis requires energy, it is possible to integrate at least some of the components between the carbonylation reaction system and the BPL purification system and/or thermolysis system. For example, steam can be formed in a heat exchanger of the carbonylation reaction system and transported to the BPL purification system for heating a distillation column for example. In addition, the BPL purification system and the carbonylation reaction system may be integrated into a single system or unit so that the heat produced from the carbonylation reaction can be used in the BPL purification system (in an evaporator or distillation column). The steam can be generated in a heat exchanger via a temperature gradient between reaction fluids and water/steam of the heat exchanger. Steam can be used for heat integration between exothermic units (carbonylation reaction, polymerization reaction) and endothermic units (BPI. purification system's columns/evaporators and thermolysis reaction). In some embodiments, steam is only used for heat management and integration and will not be introduced directly into the production processes.

As previously described, water and oxygen can affect the carbonylation catalyst. As such, oxygen and water intrusion into the carbonylation system should also be minimized. As such, the reactor can have a mag drive, a double mechanical seal, and/or materials of construction that are compatible with the reactants and products of the carbonylation reaction but not permeable to atmosphere. In some embodiments, the materials of construction of the reactor include metals. In some embodiments, the metals can be stainless steel. In some embodiments, the metals can be carbon steel. In some embodiments, the metals can be metal alloys such as nickel alloys. In some embodiments, the metals are chosen when compatibility or process conditions dictate, e.g., high chloride content or if carbon steel catalyzes EO decomposition. In some embodiments, everything up until the polymerization reaction system can include carbon steel. One of the benefits of carbon steel over stainless steel is its cost. In some embodiments, the metals can have a surface finish so as to minimize polymer nucleation sites. The materials of construction of the reactor can also include elastomer seals. In some embodiments, the elastomer seals are compatible with the reactants and products of the carbonylation reaction but not permeable to the atmosphere. Examples of elastomer seals include but are not limited to Kalrez 6375, Chemraz 505, PTFE encapsulated Viton, and PEEK. The materials of construction of external parts of the carbonylation reaction system can be compatible with the environment, for example, compatible with sand, salty water, not heat absorbing, and can protect the equipment from the environment.

In some embodiments, the carbonylation reaction system is operated so as to minimize or mitigate PPL formation prior to the polymerization reaction system. In some embodiments, the carbonylation reaction system is operated so as to avoid catalyst decomposition.

In some embodiments, the carbonylation reactor(s) can have a downstream flash tank with a reflux condenser to separate unreacted carbon monoxide as a recycled carbon monoxide stream from the carbonylation reaction system. As previously described, the recycled carbon monoxide stream can be sent to a CO compressor and/or combined with a fresh carbon monoxide feed prior to being sent back into the carbonylation reaction system. The flash tank can separate most of the CO to avoid its separation downstream. In some embodiments, excess gas is removed or purged from the reactor itself and thus a flash tank is not necessary.

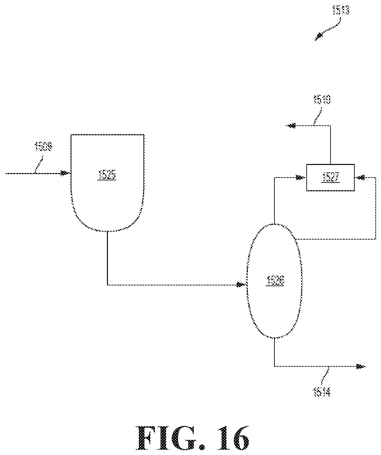

FIG. **16** illustrates an exemplary embodiment of a carbonylation reaction system disclosed herein. Carbonylation reaction system 1513 can include carbonylation reaction system inlet 1509 for carbonylation reactor 1525. As previously described, the inlet can be made up of multiple inlets or feeds into the reaction system. In addition, carbonylation reaction system 1513 includes flash tank 1526 with condenser 1527. Flash tank 1526 and condenser 1527 separate the reactor product stream into recycled carbon monoxide stream 1510 and beta-propiolactone product stream 1514.

### BPL Purification System (and Solvent Recycle)

The beta-propiolactone product stream can be fed to the BPL purification system. The BPL purification system can separate BPL into a BPL purified stream from low-boiling impurities before it enters the polymerization reaction system, where high purity BPL can be required. In some embodiments, the BPL purified stream can have at least about 90 wt% BPL, at least about 95 wt% BPL, at least about 98 wt% BPL, at least about 99 wt% BPL, at least about 99.3 wt% BPL, at least about 99.5 wt% BPL, at least about 99.8 wt%, or at least about 99.9 wt%. In some embodiments, the BPL purified stream can have at most about 1 wt% solvent, at most about 0.5 wt% solvent, or at most about 0.1 wt% solvent. In some embodiments, the BPL purification system can also create a solvent recycle stream. In some embodiments, the BPL purification system can separate the BPL from the other components in the stream such as solvent, unreacted ethylene oxide, unreacted carbon monoxide, secondary reaction product acetaldehyde, and secondary reaction product succinic anhydride In some embodiments, the temperature in the BPL purification system can be at most about 150°C, at most about 125°C, at most about 115°C, at most about 105°C, or at most about 100°C. When BPL is exposed to temperatures greater than 100 °C, the BPL can potentially decompose or be partially polymerized. Accordingly, the BPL can be purified without being exposed to temperatures of about 150 °C, 125 °C, 115 °C, 105 °C, or 100 °C.

In some embodiments, the separation is performed by exploiting the boiling point differential between the beta-propiolactone and the other components of the carbonylation product stream, primarily the solvent. In some embodiments, the boiling point of the solvent is lower than the boiling point of the beta-propiolactone. In some embodiments, the solvent is volatilized (e.g., evaporated) from the BPL purification feed along with other lighter components (e.g., ethylene oxide & acetaldehyde), leaving behind BPL, other heavier compounds (e.g., catalyst and succinic anhydride) and some leftover solvent from the BPL purification feed. In some embodiments, this includes exposing the BPL purification feed to reduced pressure. In some embodiments, this includes exposing BPL purification feed to increased temperature. In some embodiments, this includes exposing the BPL purification feed to both reduced pressure and increased temperature.

In some embodiments, the separation may be effected in a sequence of steps, each operating at an independent temperature and pressure. For example, in one embodiment, two steps may be used to obtain a more effective separation of beta-propiolactone, or a separate separation step may be used to isolate certain reaction by-products. In some embodiments, when a mixture of solvents is used, multiple separation steps may be required to remove particular solvents, individually or as a group, and effectively isolate the beta-propiolactone.

In certain embodiments, the separation of the beta-propiolactone from the BPL purification feed is performed in two stages. In some embodiments the process includes a preliminary separation step to remove one or more components of the BPL purification feed having boiling points below that of the beta-propiolactone product.

In some embodiments, the preliminary separation step includes separating the BPL purification feed into a gas stream comprising ethylene oxide, solvent, and BPL (and potentially carbon monoxide, acetaldehyde, and/or BPL); and a liquid stream comprising beta-propiolactone (and potentially succinic anhydride and/or solvent). In the second step of separation, the liquid stream is further separated into a beta-propiolactone stream comprising beta-propiolactone, a solvent stream comprising solvent, and potentially succinic anhydride purge stream. The gas stream can also be further separated into a solvent stream comprising solvent, a light gases stream comprising solvent and ethylene oxide (and potentially acetaldehyde), and a liquid BPL stream comprising BPL and solvent. The liquid BPL stream can join with the liquid stream prior to separation of the liquid stream and form a combined feed to the second separation step. In some embodiments, the solvent stream from the second separation step and/or the solvent stream from the gas stream separation can form the solvent recycle stream which can be fed to the carbonylation reaction system or to a solvent reservoir.

In some embodiments where one or more solvents with a boiling point lower than that of the beta-propiolactone are present, the lower boiling solvent may be volatilized (e.g., evaporated) from the BPL purification feed in a preliminary separation step, leaving behind a mixture comprising catalyst, beta-propiolactone, other solvents (if any) and other compounds in the BPL purification stream which is then further treated to separate the beta-propiolactone stream.

In certain embodiments where the separation is performed in two stages, the first step of separation comprises exposing the reaction stream to mildly reduced pressure to produce the gas stream and the liquid stream. In certain embodiments where the separation is performed in two stages, the gas stream can be returned to the carbonylation step.

In certain embodiments, the separation of the beta-propiolactone from the BPL purification feed is performed in three stages. In the first step of separation, the BPL purification feed is separated into a gaseous stream comprising ethylene oxide, solvent, and BPL (and potentially carbon monoxide and/or acetaldehyde); and a liquid stream comprising solvent and beta-propiolactone (and potentially succinic anhydride). In the second step of separation, the gaseous stream is separated into a solvent side stream comprising solvent; a light gas stream comprising ethylene oxide and solvent (and potentially carbon monoxide and/or acetaldehyde); and second liquid stream comprising solvent and BPL. In the third step of separation, the second liquid stream and the first liquid stream are combined and separated into a gaseous solvent stream comprising solvent, a purified BPL stream comprising BPL, and potentially a succinic anhydride purge stream. In some embodiments, the solvent side stream and/or the gaseous solvent stream can be used as the solvent recycle stream for use in the carbonylation reaction system or can be stored in a solvent storage tank.

In certain embodiments where the separation is performed in three stages, the first step of separation comprises exposing the BPL purification feed to atmospheric pressure. In certain embodiments where the separation is performed in three stages, the second step of separation comprises exposing the gaseous stream to atmospheric pressure. In certain embodiments where the separation is performed in three stages, the third step of separation comprises exposing the gaseous stream to a vacuum or reduced pressure. In certain embodiments, the reduced pressure is between about 0.05-0.25 bara. In certain embodiments, the reduced pressure is between about 0.1-0.2 bara or about 0.15 bara.

In certain embodiments, the separation of the beta-propiolactone from the BPL purification feed is performed in four stages. In the first step of separation, the BPL purification feed is separated into a gaseous stream comprising ethylene oxide, solvent, and BPL (and potentially carbon monoxide and/or acetaldehyde); and a liquid stream comprising solvent, beta-propiolactone (and potentially succinic anhydride). In the second step of separation, the gaseous stream is separated into a solvent side stream comprising solvent; a light gas stream comprising ethylene oxide and solvent (and potentially carbon monoxide and/or acetaldehyde); and second liquid stream comprising solvent and BPL. In the third step of separation, the second liquid stream and the first liquid stream are combined and separated into a gaseous solvent stream comprising solvent, a purified BPL stream comprising BPL, and potentially a catalyst and succinic anhydride purge stream. In the fourth step of separation, the light gas stream is separated into a third solvent stream comprising solvent and a second light gas stream comprising ethylene oxide (and potentially carbon monoxide and/or acetaldehyde). In some embodiments, the solvent side stream, the gaseous solvent stream, and/or the third solvent stream can be used as the solvent recycle stream for use in the carbonylation reaction system or can be stored in a solvent storage tank.

In certain embodiments where the separation is performed in four stages, the first step of separation comprises exposing the BPL purification feed to atmospheric pressure. In certain embodiments where the separation is performed in four stages, the second step of separation comprises exposing the gaseous stream to atmospheric pressure. In certain embodiments where the separation is performed in four stages, the third step of separation comprises exposing the combined liquid stream to a vacuum or reduced pressure. In certain embodiments, the reduced pressure is between about 0.05-0.25 bara. In certain embodiments, the reduced pressure is between about 0.1-0.2 bara or about 0.15 bara. In certain embodiments where the separation is performed in four stages, the fourth step of separation comprises exposing the light gas stream to atmospheric pressure.

In some embodiments, the BPL purification system can include at least one distillation column to separate BPL from the other components in the post-isolation carbonylation stream. In some embodiments, the BPL purification system includes at least two distillation columns. In some embodiments, the BPL purification system includes at least three distillation columns. In some embodiments, at least one of the distillation columns is a stripping column (i.e., stripper). In some embodiments, at least one of the distillation columns is a vacuum column. In some embodiments, the BPL purification system can include an initial evaporator, wherein the post-isolation carbonylation stream is first fed to an evaporator in the BPL purification system. The evaporator can perform a simple separation between the solvent and the BPL in the post-isolation carbonylation stream. The evaporator can reduce loads on subsequent distillation columns making them smaller. In some embodiments, the evaporator can reduce loads on subsequent distillation columns making them smaller by evaporating solvent in the post-isolation carbonylation stream at about atmospheric pressure and about 100 °C.

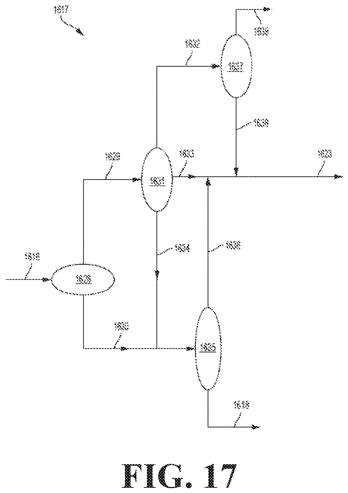

FIG. **17** illustrates an exemplary embodiment of the BPL purification system disclosed herein. In some embodiments, the feed to the BPL purification system can be fed to evaporator 1628. In some embodiments, the evaporator can operate at most about 5 bara, at most about 4 bara, at most about 3 bara, at most about 2 bara, at most about atmospheric pressure (i.e., 1 bara), or at about atmospheric pressure. In some embodiments, the evaporator can operate at a temperature between about 80-120 °C, between about 90-100 °C, between about 95-105 °C, at about 100 °C, at most about 100 °C, at most about 105 °C, at most about 110 °C, or at most about 120 °C. In some embodiments, the evaporator is a flash tank. Referring again to FIG. **17****,** in the exemplary system evaporator 1628 can separate the feed into overhead stream 1629 and bottoms stream 1630. Overhead stream 1629 can comprise mainly of THF with low boiling point components (e.g., CO, EO, acetaldehyde) and a small amount of BPL.

Referring again to FIG. **17****,** in the exemplary system depicted overhead stream 1629 can be sent to solvent purification column 1631. The solvent purification column can be a distillation column. In some embodiments, the solvent purification column can be a stripping column or stripper. In some embodiments, the solvent purification column can operate at most about 5 bara, at most about 4 bara, at most about 3 bara, at most about 2 bara, at most about atmospheric pressure (i.e., 1 bara), or at about atmospheric pressure. In some embodiments, the evaporator can operate at a temperature of at most about 1 00 °C, at most about 105 °C, at most about 110 °C, or at most about 120 °C. In some embodiments, an overhead temperature is maintained at about 20-60 °C, about 30-50 °C, about 40-50 °C, about 44 °C. In some embodiments, the solvent purification column can prevent BPL from getting into any vent streams. In some embodiments, solvent purification column can have at least 12 stages with a condenser as stage 1. In some embodiments, solvent purification column can have an internal cooler which can create a side stream. In some embodiments, solvent purification column can have an internal cooler above the side stream withdrawal. In some embodiments, internal cooler can be between stages in the middle of the column. In some embodiments, internal cooler can be between stages 5 and 6 of the solvent purification column. In some embodiments, solvent purification column can separate overhead stream 1629 into overhead stream 1632, bottoms stream 1634, and side stream 1633. Overhead stream 1632 can comprise low boiling components (e.g., EO, CO, acetaldehyde) and around half solvent. Bottoms stream 1634 can comprise mainly BPL and solvent. In some embodiments, solvent purification column can recover at least 90 wt%, at least 95 wt%, at least 98 wt%, at least 99 wt%, or at least 99.5 wt% of BPL from overhead stream 1629 in bottoms stream 1634.

Bottoms stream 1630 and bottoms stream 1634 can be combined and sent to BPL purification column 1635. BPL purification column can be a distillation column. In some embodiments, BPL purification column can be a vacuum column or a column operating under reduced pressure. In some embodiments, the operating pressure of the BPL purification column can be less than atmospheric pressure (1 bara), less than about 0.5 bara, less than about 0.25 bara less than 0.2 bara, less than 0.15 bara, or about 0.15 bara. In some embodiments, the BPL purification column can include a reboiler that can be maintained at most about 120°C, at most about 110 °C, at most about 100 °C, or about 100 °C. In some embodiments, an overhead temperature is maintained at about 5-30 °C, about 10-20 °C, about 12-16 °C, about 14 °C.

In some embodiments, BPL purification column can separate the combined bottoms streams 1630 and 1634 into overhead stream 1636 and bottoms stream 1618 (i.e., BPL purified stream 1618). Bottoms stream 1618 can be substantially pure BPL with minimal solvent. In some embodiments, bottoms stream 1618 can also include some heavy components such as succinic anhydride. Succinic anhydride can have some volatility and if accumulated in the sump can produce an undesirable rise in boiling temperature in the reboiler. In some embodiments, succinic anhydride can accumulate in the sump and can be purged from the sump by periodically purging the sump when the succinic anhydride wt% reaches a predefined value (e.g., at least 1 wt%, 2 wt%, 3 wt%, 4 wt%, or 5 wt%). In some embodiments, overhead stream 1636 can have a mass flow rate of about at least about 500 kg/hr, at least about 600 kg/hr, at least about 700 kg/hr, at least about 750 kg/hr at least about 800 kg/hr, or at least about 850 kg/hr. In some embodiments, overhead stream 1636 can have a solvent wt% of at least about 95, at least about 98, at least about 99, at least about 99.1, or at least about 99.5. In some embodiments, overhead stream 1636 can have an ethylene oxide wt% of about 0-3, about 0.2-2, about 0.2-1.5, about 0.5-1, about 0.8, at most about 3, at most about 2, at most about 1, at most about 0.8, at most about 0.5. In some embodiments, overhead stream 1638 can have an acetaldehyde wt% of about 0-0.2, about 0.05-0.15, about 0.1, at most about 0.1, or at most about 0.2.

Overhead stream 1632 can be sent to light gas column 1637 to be separated into overhead stream 1639 and bottoms stream 1638. The light gas column can be a distillation column. In some embodiments, the light gas column can operate at most about 5 bara, at most about 4 bara, at most about 3 bara, at most about 2 bara, at most about atmospheric pressure (i.e., 1 bara), or at about atmospheric pressure. In some embodiments, light gas column can include a partial condenser. In some embodiments, the partial condenser operates at a temperature of at about 0-20 °C, about 5-15 °C, about 10-15 °C, about 10-13 °C. In some embodiments, the temperature maintained at the bottom of light gas column is about 20-70 °C, about 40-60 °C, about 45-55 °C, or about 50 °C. In some embodiments, the overhead temperature maintained in light gas column can be about -10-10 °C, about -5-5 °C, about -2-3 °C, or about 1 °C. Overhead stream 1639 can comprise mostly of the acetaldehyde produced in the carbonylation reaction system as well as low boiling point ethylene oxide. In some embodiments, overhead stream 1639 can be disposed of (e.g., incinerator, flare, etc.) so acetaldehyde does not accumulate in the overall production system.

In some embodiments, side stream 1633, bottoms stream 1638, overhead stream 1636 or combinations thereof can form solvent recycle stream 1623. In some embodiments, side stream 1633, bottoms stream 1638, and overhead stream 1636 can be combined to form solvent recycle stream 1623. In some embodiment, side stream 1633, bottoms stream 1638, and/or overhead stream 1636 can be sent to a solvent recycle tank or storage. In some embodiments, the solvent recycle stream is fed back to the carbonylation reaction system. In some embodiments, the solvent recycle stream fed to the carbonylation reaction system is from the solvent recycle tank or storage. In some embodiments, the solvent streams entering and/or exiting the solvent recycle tank or storage can be purified for example by passing the stream through an absorber to remove potential oxygen and/or moisture from the stream. In some embodiments, the solvent recycle tank or storage can be equipped with sensors to determine the water and/or oxygen content in the storage tank.

### Polypropiolactone Production System

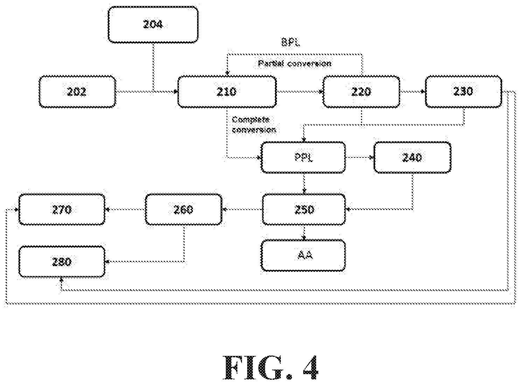

With reference to FIG. **4****,** the relationship of the polypropiolactone production system with other unit operations, such as the beta-propiolactone purification system and the acrylic acid production system, is depicted.

Beta-propiolactone purification system **202** is configured to feed a beta-propiolactone product stream into polypropiolactone production system **210.** Homogeneous catalyst delivery system **204** is configured to feed a homogeneous polymerization catalyst into the polymerization reactor of polypropiolactone production system **210.** Polypropiolactone production system **210** is configured to polymerize beta-propiolactone to produce polypropiolactone. Depending on the type of polymerization reactors selected and the configuration of such reactors, as well as the operating conditions (*e.g*., operating temperature, operating pressure, and residence time) and choice of polymerization catalysts used, the extent of conversion of the beta-propiolactone may be controlled. In some variations, operating temperature is the average temperature of the contents of the reactor.

In some variations, partial conversion of beta-propiolactone to polypropiolactone is achieved, and distillation unit **220** is configured to recycle at least a portion of unreacted beta-propiolactone to polypropiolactone production system **210.** In other variations, complete conversion of beta-propiolactone to polypropiolactone is achieved. The polypropiolactone product stream produced from polypropiolactone production system **210** is fed to acrylic acid production system **250,** which is configured to produce acrylic acid from the polypropiolactone.

In some variations, unit **240** is configured to receive the polypropiolactone product stream (*e.g.*, in liquid form) from polypropiolactone production system **210,** and is configured to pelletize, extrude, flake, or granulate the polypropiolactone product stream.

It should be understood, however, that FIG. **4** provides one exemplary configuration of these unit operations. In other variations, one or more of the unit operations depicted in FIG. **4** may be added, combined or omitted, and the order of the unit operations may be varied as well.

With reference again to FIG. **3****,** the polypropiolactone production system is configured to produce polypropiolactone by polymerizing beta-propiolactone in the presence of a polymerization catalyst. While FIG. **3** depicts the use of a single plug flow reactor for the polymerization of beta-propiolactone to produce polypropiolactone, other reactor types and reactor configurations may be employed.

In some embodiments, the polypropiolactone production system includes a beta-propiolactone, a polymerization catalyst source, and at least one polymerization reactor.

In certain embodiments, conversion of BPL to PPL is performed in a continuous flow format. In certain embodiments, conversion of BPL to PPL is performed in a continuous flow format in the gas phase. In certain embodiments, conversion of BPL to PPL is performed in a continuous flow format in the liquid phase. In certain embodiments, conversion of BPL to PPL is performed in a liquid phase in a batch or semi-batch format. Conversion of BPL to PPL may be performed under a variety of conditions. In certain embodiments, the reaction may be performed in the presence of one or more catalysts that facilitate the transformation of the BPL to PPL.

In some embodiments, the production stream entering the polymerization process is a gas or a liquid. The conversion of BPL to PPL in the polymerization process may be performed in either the gas phase or the liquid phase and may be performed neat, or in the presence of a carrier gas, solvent, or other diluent.

In certain variations, the operating temperature of the polymerization reactor is maintained at or below the pyrolysis temperature of polypropiolactone.

Any suitable polymerization catalysts may be used to convert the BPL product stream entering the PPL production system into a PPL product stream. In some embodiments, the polymerization catalyst is homogenous with the polymerization reaction mixture. Any suitable homogeneous polymerization catalyst capable of converting the production stream to the PPL product stream may be used in the methods described herein.

The polymerization process may further comprise a polymerization initiator including but not limited to alcohols, amines, polyols, polyamines, and diols, amongst others. Further, a variety of polymerization catalysts may be used in the polymerization process, including by not limited to metals (e.g., lithium, sodium, potassium, magnesium, calcium, zinc, aluminum, titanium, cobalt, etc..) metal oxides, carbonates of alkali- and alkaline earth metals, borates, silicates, of various metals.

In certain embodiments, suitable polymerization catalysts include carboxylate salts of metal ions or organic cations. In some embodiments, a carboxylate salt is other than a carbonate.

In certain embodiments, a polymerization catalyst is combined with the production stream containing BPL. In certain embodiments, the molar ratio of the polymerization catalyst to the BPL in the production stream is about 1:100 polymerization catalyst:BPL to about 25:100 polymerization catalyst:BPL. In certain embodiments, the molar ratio of polymerization catalyst:BPL is about 1:100, 5:100, 10:100, 15:100, 20:100, 25:100, or a range including any two of these ratios.

In certain embodiments, where the polymerization catalyst comprises a carboxylate salt, the carboxylate has a structure such that upon initiating polymerization of BPL, the polymer chains produced have an acrylate chain end. In certain embodiments, the carboxylate ion on a polymerization catalyst is the anionic form of a chain transfer agent used in the polymerization process.

In certain embodiments, the polymerization catalyst comprises a carboxylate salt of an organic cation. In certain embodiments, the polymerization catalyst comprises a carboxylate salt of a cation wherein the positive charge is located at least partially on a nitrogen, sulfur, or phosphorus atom. In certain embodiments, the polymerization catalyst comprises a carboxylate salt of a nitrogen cation. In certain embodiments, the polymerization catalyst comprises a carboxylate salt of a cation selected from the group consisting of: ammonium, amidinium, guanidinium, a cationic form of a nitrogen heterocycle, and any combination of two or more of these. In certain embodiments, the polymerization catalyst comprises a carboxylate salt of a phosphorus cation. In certain embodiments, the polymerization catalyst comprises a carboxylate salt of a cation selected from the group consisting of: phosphonium and phosphazenium. In certain embodiments, the polymerization catalyst comprises a carboxylate salt of a sulfur-containing cation. In certain embodiments, the polymerization catalyst comprises a sulfonium salt.

In some embodiments, the homogeneous polymerization catalyst is a quaternary ammonium salt (for example, tetrabutylammonium (TBA) acrylate, TBA acetate, trimethylphenylammonium acrylate, or trimethylphenylammonium acetate) or a phosphine (for example, tetraphenyl phosphonium acrylate).

In some embodiments, the catalyst is tetrabutylammonium acrylate, iron chloride, TBA acrylate, TBA acetate, trimethylphenylammonium acrylate, trimethylphenylammonium acetate, or tetraphenyl phosphonium acrylate.

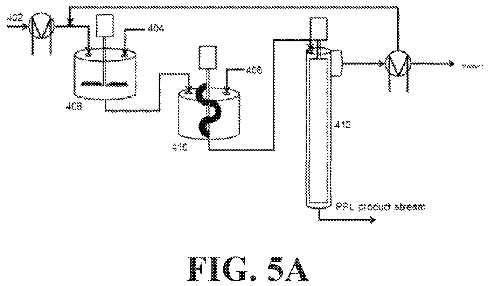

With reference to FIG. **5A****,** the polymerization catalyst in the first reactor (**408**) and the additional polymerization catalyst in the second reactor (**410**) may be the same or different. For example, in some embodiments, wherein the same catalyst is used in both reactors, concentration of catalyst is not the same in each reactor.

In some embodiments, the homogeneous polymerization catalyst is added to a polymerization reactor as a liquid. In other embodiments it is added as a solid, which then becomes homogeneous in the polymerization reaction. In some embodiments where the polymerization catalyst is added as a liquid, the polymerization catalyst may be added to the polymerization reactor as a melt or in any suitable solvent. For example, in some variations AA, molten PPL or BPL is used as a solvent.

In some embodiments, the solvent for the polymerization catalyst is selected such that the catalyst is soluble, the solvent does not contaminate the product polymer, and the solvent is dry. In some variations, the polymerization catalyst solvent is AA, molten PPL, or BPL. In certain variations, solid PPL is added to a polymerization reactor, heated above room temperature until liquid, and used as the polymerization catalyst solvent. In other embodiments, BPL is added to the polymerization reactor, cooled below room temperature until liquid, and used as the polymerization catalyst solvent.

In some variations, the liquid polymerization catalyst (as a melt or as a solution in a suitable solvent) is prepared in one location, then shipped to a second location where it is used in the polymerization reactor. In other embodiments, the liquid polymerization catalyst (as a melt or as a solution in a suitable solvent) is prepared at the location of the polymerization reactor (for example, to reduce exposure to moisture and/or oxygen).

A liquid polymerization catalyst (as a melt or as a solution in a suitable solvent) may be pumped into a stirred holding tank or directly into the polymerization reactor.

In some variations, the liquid catalysts and/or catalyst precursors are dispensed from a shipping vessel/container into an intermediate, inert vessel to be mixed with suitable solvent, and then the catalyst solution is fed to the reactor or a pre-mix tank. The catalyst preparation system and the connections may be selected in such a way to ensure that the catalyst or precursors are not contacted by ambient atmosphere.

In some variations, the polymerization reactor is a PFR, the liquid catalyst (as a meld or as a solution in a suitable solvent) and BPL are fed to a small stirred tank and then the mixture is fed to the PFR. In other embodiments, the BPL and the liquid catalyst are fed to a pre-mixer installed at the inlet of the PFR. In yet another embodiment, the PFR has a static mixer, the reaction occurs on the shell side of the reactor, and the liquid catalyst and BPL are introduced at the inlet of the reactor and the static mixer elements mix the catalyst and BPL. In still another embodiment, the PFR has a static mixer, the reaction occurs on the shell side of the reactor, and the liquid catalyst is introduced into the PFR using metering pumps at multiple locations distributed along the lengths of the reactor.

In some embodiments, the homogeneous polymerization catalyst is delivered to the location of the polymerization reactor as a solid (for example, solid Al(TPP)Et or solid TBA acrylate), the solid catalyst is unpacked and loaded in hoppers under inert conditions (CO or inert gas), and the solids from hoppers are be metered into a suitable solvent before pumping into the polymerization reactors or mixing tanks.

Any suitable polymerization catalyst may be used in the polymerization process to convert the production stream entering the polymerization process to the PPL product stream. In some embodiments, the polymerization catalyst is heterogeneous with the polymerization reaction mixture. Any suitable heterogeneous polymerization catalyst capable of polymerizing BPL in the production stream to produce the PPL product stream may be used in the methods described herein.

In some embodiments, the heterogeneous polymerization catalyst comprises any of the homogeneous polymerization catalysts described above, supported on a heterogeneous support. Suitable heterogeneous supports may include, for example, amorphous supports, layered supports, or microporous supports, or any combination thereof. Suitable amorphous supports may include, for example, metal oxides (such as aluminas or silicas) or carbon, or any combination thereof. Suitable layered supports may include, for example, clays. Suitable microporous supports may include, for example, zeolites (such as molecular sieves) or crosslinked functionalized polymers. Other suitable supports may include, for example, glass surfaces, silica surfaces, plastic surfaces, metal surfaces including zeolites, surfaces containing a metallic or chemical coating, membranes (comprising, for example, nylon, polysulfone, silica), micro-beads (comprising, for example, latex, polystyrene, or other polymer), and porous polymer matrices (comprising, for example, polyacrylamide, polysaccharide, polymethacrylate).

In some embodiments, the heterogeneous polymerization catalyst is a solid-supported quaternary ammonium salt (for example, tetrabutylammonium (TBA) acrylate, TBA acetate, trimethylphenylammonium acrylate, or trimethylphenylammonium acetate) or a phosphine (for example, tetraphenyl phosphonium acrylate).

In some embodiments, the catalyst is solid-supported tetrabutylammonium acrylate, iron chloride, TBA acrylate, TBA acetate, trimethylphenylammonium acrylate, trimethylphenylammonium acetate, or tetraphenyl phosphonium acrylate.

In certain embodiments, conversion of the production stream entering the polymerization process to the PPL product stream utilizes a solid carboxylate catalyst and the conversion is conducted at least partially in the gas phase. In certain embodiments, the solid carboxylate catalyst in the polymerization process comprises a solid acrylic acid catalyst. In certain embodiments, the production stream enters the polymerization process as a liquid and contacted with a solid carboxylate catalyst to form the PPL product stream. In other embodiments, the production stream enters the polymerization process as a gas and contacted with a solid carboxylate catalyst to form the PPL product stream.

In some variations, the polymerization catalyst is a heterogeneous catalyst bed. Any suitable resin may be used for such a heterogeneous catalyst bed. In one embodiment, the polymerization catalyst is a heterogeneous catalyst bed packed in a tubular reactor. In some embodiments, the polymerization reactor system comprises a plurality of heterogeneous catalyst beds, wherein at least one catalyst bed is being used in the polymerization reactor, and at least one catalyst bed is not being used in the polymerization reactor at the same time. For example, the catalyst bed not actively being used may be being regenerated for later use, or may be stored as a back-up catalyst bed in case of catalyst failure of the actively used bed. In one embodiment, the polymerization reactor system comprises three heterogeneous catalyst beds, wherein one catalyst bed is being used in the polymerization reactor, one catalyst bed is being regenerated, and one catalyst bed is being stored as a back-up in case of catalyst failure.

In some variations, the heterogeneous polymerization catalyst is prepared in one location, then shipped to a second location where it is used in the polymerization reactor. In other embodiments, the heterogeneous polymerization catalyst is prepared at the location of the polymerization reactor (for example, to reduce exposure to moisture and/or oxygen).

In some embodiments, the polymerization process does not include solvent. In other embodiments, the polymerization process does include one or more solvents. Suitable solvents can include, but are not limited to: hydrocarbons, ethers, esters, ketones, nitriles, amides, sulfones, halogenated hydrocarbons, and the like. In certain embodiments, the solvent is selected such that the PPL product stream is soluble in the reaction medium.

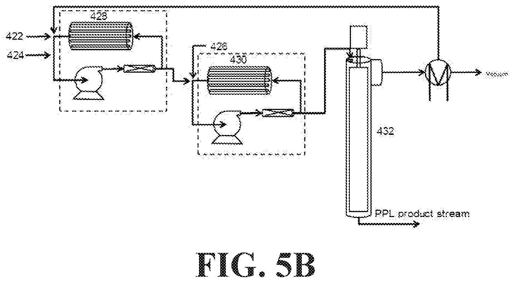

For example, with reference to polymerization process depicted in FIGS. 5A and 5B, reactors **408** and/or **410** may be configured to receive solvent. For example, in one variation, polymerization process may further include a solvent source configured to feed solvent into reactors **408** and **410.** In another variation, the BPL from production stream **402** may be combined with solvent to form the production stream containing BPL fed into reactor **408.** In yet another variation, the polymerization catalyst from polymerization catalyst sources **404** and/or **406** may be combined with a solvent to form polymerization catalyst streams fed into the reactors.

The one or more polymerization reactors in the polymerization process may be any suitable polymerization reactors for the production of the PPL product stream from the production stream entering the polymerization process. For example, the polymerization reactor may be a CSTR, loop reactor, or plug flow reactor, or a combination thereof. In some embodiments, the polymerization process comprises a single reactor, while in other embodiments, the polymerization process comprises a plurality of reactors. In some variations, the BPL is completely converted to PPL in a polymerization reactor. In other variations, the BPL is not completely converted to PPL in a polymerization reactor, and the PPL stream exiting the polymerization reactor comprises unreacted BPL. In certain variations, the PPL stream comprising unreacted BPL is directed to a BPL/PPL separator to remove the BPL from the PPL. The BPL may then be recycled back into the polymerization reactor, as described, for example, in FIGS. **8****,** **9****,** **11** and **12** above.

In certain variations, the polymerization process comprises two reactors in series, wherein the purified BPL stream enters the first reactor and undergoes incomplete polymerization to produce a first polymerization stream comprising PPL and unreacted BPL, the first polymerization stream exits the outlet of the first reactor and enters the inlet of the second reactor to undergo additional polymerization. In some variations, the additional polymerization completely converts the BPL to PPL, and the PPL product stream exits the outlet of the second polymerization reactor.

In other variations, the additional polymerization incompletely converts the BPL to PPL, and the PPL product stream exiting the outlet of the second polymerization reactor comprises PPL and unreacted BPL. In certain variations, the PPL product stream enters a BPL PPL separator to remove unreacted BPL from the PPL product stream. In certain variations, the unreacted BPL is recycled back into the polymerization process. For example, in some variations, the unreacted BPL is recycled to the first polymerization reactor or the second polymerization reactor, or both the first and the second polymerization reactors.

In some embodiments, the polymerization process comprises a series of one or more continuous CSTR reactors followed by a BPL/PPL separator (such as a wiped film evaporator (WFE) or distillation column). In other embodiments, the polymerization process comprises a series of one or more loop reactors followed by a BPL/PPL separator (such as a WFE or distillation column). In yet other embodiments, the polymerization process comprises a series of one or more in a series of one or more CSTR reactors followed by a polishing plug flow reactor (PFR) or by a BPL/PPL separator (Wiped Film Evaporator or Distillation column). In still other embodiments, the polymerization process comprises a series of one or more PFR optionally followed by a BPL/PPL separator (such as a WFE or distillation column).

In some embodiments, the polymerization process comprises greater than two polymerization reactors. For example, in certain embodiments, the polymerization process comprises three or more polymerization reactors, four or more polymerization reactors, five or more polymerization reactors, six or more polymerization reactors, seven or more polymerization reactors, or eight or more polymerization reactors. In some variations, the reactors are arranged in series, while in other variations, the reactors are arranged in parallel. In certain variations, some of the reactors are arranged in series while others are arranged in parallel.

FIGS. **5A** and **5B** depict exemplary PPL production systems comprising two polymerization reactors connected in series, and a PPL purification and BPL recycle system with a wiped film evaporator (WFE) for recycling of unreacted BPL back into the polymerization reactors. With reference to FIG. **5A****,** the polymerization process includes BPL source **402** and polymerization catalyst source **404,** configured to feed BPL and catalyst, respectively, into reactor **408.** Reactor **408** includes a BPL inlet to receive BPL from the BPL source and a polymerization catalyst inlet to receive polymerization catalyst from the polymerization catalyst source. In some variations, the BPL inlet is configured to receive the BPL from the BPL source at a rate of 3100 kg/hr, and the first polymerization catalyst inlet is configured to receive the polymerization catalyst from the polymerization catalyst source at a rate of 0.1 to 5 kg/hr.

With reference again to FIG. **5A****,** reactor **408** further includes a mixture outlet to output a mixture comprising PPL and unreacted BPL, to reactor **410.** Reactor **410** is a second reactor positioned after reactor **408,** and is configured to receive the mixture from reactor **408** and additional polymerization catalyst from polymerization catalyst source **406.** In some variation, the mixture inlet of the second reactor is configured to receive the mixture from the first reactor at a rate of 4500 kg/hr, and the second polymerization catalyst inlet is configured to receive additional polymerization catalyst from the catalyst source at a rate of 0. 1 to 4 kg/hr.

With reference again to FIG. **5A****,** reactor **408** further includes a mixture outlet to output a mixture comprising PPL, and unreacted BPL to evaporator **412.** In some variations, the mixture outlet is configured to output such mixture at a rate of 4500 kg/hr.

With reference to FIG. **5B****,** the depicted polymerization process includes BPL source **422** and polymerization catalyst source **424,** configured to feed BPL and catalyst, respectively, into reactor **428.** Reactor **428** includes a BPL inlet to receive BPL from the BPL source and a polymerization catalyst inlet to receive polymerization catalyst from the polymerization catalyst source. In some variations, the BPL inlet is configured to receive the BPL from the BPL source at a rate of 3100 kg/hr, and the first catalyst inlet is configured to receive the catalyst from the catalyst source at a rate of 0.1 to 5 kg/hr.

With reference again to FIG. **5B****,** reactor **428** further includes a mixture outlet to output a mixture comprising PPL and unreacted BPL to reactor **430.** Reactor **430** is a second reactor positioned after reactor **428,** and is configured to receive the mixture from reactor **428** and additional polymerization catalyst from polymerization catalyst source **426.** In some variation, the mixture inlet of the second reactor is configured to receive the mixture from the first reactor at a rate of 4500 kg/hr, and the second polymerization catalyst inlet is configured to receive additional polymerization catalyst from the polymerization catalyst source at a rate of 0.1 to 4 kg/hr.

In some variations, the mixture output from reactor **410** (FIG. **5A**) and reactor **430** (FIG. **5B**) is made up of at least 95 %wt PPL.

Such mixture may be output from the second reactor to an evaporator. Evaporator **412** (FIG. **5A**) and **432** (FIG. **5B**) may be, for example, a wiped film evaporator, thin film evaporator, or falling film evaporator. The evaporator is configured to produce a PPL product stream.

In some variations, the evaporator is configured to produce a PPL product stream having a purity of at least 98%, at least 98.5%, or at least 99%. In other variations, the evaporator is configured to produce a PPL product stream having less 0.1% wt of BPL.

In some variations, the polymerization process further includes one or more heat exchangers. With reference to FIG. **5A****,** BPL from BPL source **402** may be passed through heat exchanger before such BPL stream is fed into reactor **408.**

It should generally be understood that the polymerization is an exothermic reaction. Thus, in other variations, reactors **408** and **410** (FIG. **5A**) may further include a connection to at least one heat exchanger. With reference to FIG. **5B****,** reactors **428** and **430** (FIG. **5B**) may further include a connection to at least one heat exchanger.

In some variations, the first reactor in the polymerization process may be configured to remove heat produced at a rate of 1.8 × 10⁹ J/hr. In some variations, the second reactor may be configured to remove heat produced at a rate of 1.8 × 10⁹ J/hr. In other variations, the heat from the first reactor and heat from the second reactor are removed at a ratio between 0.25 and 4.

The reactors of polymerization process may include any suitable reactors, including, for example, continuous reactors or semi-batch reactors. In one variation, with reference to FIG. **5A****,** the reactors may be continuous-flow stirred-tank reactors. The reactors may also include the same or different stirring devices. For example, in one variation, reactor **408** may include a low velocity impeller, such as a flat blade. In other variation, reactor **410** may include a low shear mixer, such as a curved blade.

A skilled artisan would recognize that the choice for the mixing device in each of the reactors may depend on various factors, including the viscosity of the mixture in the reactor. For example, the mixture in the first reactor may have a viscosity of 1000 cP. If the viscosity is 1000 cP, then a low velocity impeller may be desired. In another example, the mixture in the second reactor may have a viscosity of 5000 cP. If the viscosity is 5000 cP, then a low shear mixer may be desired.

In another variation, with reference to FIG. **5B****,** the reactors may be loop reactors.

It should be understood that while FIGS. **5A** and **5B** depict the use of two reactors configured in series, other configurations are considered. For example, in other exemplary variations of the polymerization process, three reactors may be employed. In yet other variations where a plurality of reactors is used in the polymerization process, they may be arranged in series or in parallel.

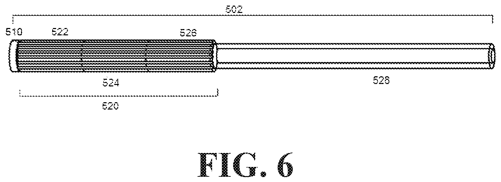

FIG. **6** depicts yet another exemplary polymerization process, which includes a BPL polymerization reactor. The polymerization reactor includes mixing zone **510** configured to mix the production stream entering the polymerization process and catalyst, and a plurality of cooling zones **520** positioned after the mixing zone. The polymerization reactor has reaction length **502,** wherein up to 95% of the BPL in the entering production stream is polymerized in the presence of the catalyst to form PPL in the first 25% of the reaction length. In some variations of the system depicted in FIG. 6, the BPL is completely converted to PPL. Such a system may be used, for example, in the complete conversion of BPL to PPL as described above for FIGS. **7****,** **10****,** **13** and **14****.**

In some variations of a polymerization reactor, the plurality of cooling zones includes at least two cooling zones. In one variation, the plurality of cooling zones includes two cooling zones or three cooling zones.

For example, polymerization reactor **500** as depicted in FIG. 6 has three cooling zones **522, 524** and **526.** In one variation, the three cooling zones are connected serially in the first 25% of the reaction length. In another variation, cooling zone **522** is configured to receive a mixture of BPL and the catalyst from the mixing zone at a rate of 3100 kg/hr; cooling zone **524** is configured to receive a mixture of the BPL, the catalyst and PPL produced in cooling zone **522** at a rate of 3100 kg/hr; and cooling zone **526** is configured to receive a mixture of the BPL, the catalyst, the PPL produced in cooling zone **522,** and PPL produced in cooling zone **524** at a rate of 3100 kg/hr.

In certain embodiments, the first 25% of the reaction length is a shell and a tube heat exchanger. In one variation, the shell may be configured to circulate a heat transfer fluid to maintain a constant temperature in reaction length **502.** In another variation, the tube heat exchanger is configured to remove heat produced in the first reaction zone.

With reference again to FIG. **6****,** polymerization reactor **500** further includes end conversion zone **528** connected to plurality of cooling zones **520.** In some variations, the end conversion zone is configured to receive a mixture of the BPL, the catalyst, and the PPL produced in plurality of cooling zones at a rate of 3100 kg/hr. In one variation, the end conversion zone has no cooling load.

In one variation, the polymerization reactor is a plug flow reactor or a shell-and-tube reactor.

The one or more polymerization reactors used in the methods described herein may be constructed of any suitable material compatible with the polymerization. For example, the polymerization reactor may be constructed from stainless steel or high nickel alloys, or a combination thereof.

In some embodiments, the polymerization process comprises a plurality of polymerization reactors, and the polymerization catalyst is introduced only into the first reactor in the series. In other embodiments, the polymerization catalyst is added separately to each of the reactors in the series. For example, referring again to FIG. **5A****,** depicted is a polymerization process comprising two CSTR in series, wherein polymerization catalyst is introduced to the first CSTR, and polymerization catalyst is separately introduced to the second CSTR. In other embodiments, a single plug flow reactor (PFR) is used, and polymerization catalyst is introduced at the beginning of the reactor, while in other embodiments polymerization catalyst is introduced separately at a plurality of locations along the length of the PFR. In other embodiments, a plurality of PFR is used, and polymerization catalyst is introduced at the beginning of the first PRF. In other embodiments, polymerization catalyst is introduced at the beginning of each PFR used, while in still other embodiments polymerization catalyst is introduced separately at a plurality of locations along the length of each PFR.

The polymerization reactor may comprise any suitable mixing device to mix the polymerization reaction mixture. Suitable mixing devices may include, for example, axial mixers, radial mixers, helical blades, high-shear mixers, or static mixers. Suitable mixing devices may comprise single or multiple blades, and may be top, bottom, or side mounted. The polymerization reactor may comprise a single mixing device, or multiple mixing devices. In some embodiments, a plurality of polymerization reactors is used, and each polymerization reactor comprises the same type of mixing device. In other embodiments, each polymerization reactor comprises a different type of mixing device. In yet other embodiments, some polymerization reactors comprise the same mixing device, while others comprise different mixing devices.

In some embodiments, the production system described herein further comprises a PPL stream processing system configured to receive the PPL product stream and produce solid PPL. For example, in one embodiment, the PPL product stream is fed into at least one inlet of a PPL stream processing system, and solid PPL exits at least one outlet of the PPL stream processing system. The PPL stream processing system may be configured to produce solid PPL in any suitable form. For example, in some embodiments, the PPL stream processing system is configured to produce solid PPL in pelleted form, flaked form, granulated form, or extruded form, or any combinations thereof. Thus, solid PPL flakes, solid PPL pellets, solid PPL granules, or solid PPL extrudate, or any combinations thereof, may exit the outlet of the PPL stream processing system. The PPL stream processing system may include one or more flaking devices, pelleting devices, extrusion devices, or granulation devices, or any combinations thereof.

In certain embodiments, the production system described herein produces a PPL product stream at a first location, the PPL product stream is processed to produce solid PPL, and the solid PPL is converted to an AA product stream in a second location. In some embodiments, the first location and the second location are at least 100 miles apart. In certain embodiments, the first location and the second location are between 100 and 12,000 miles apart. In certain embodiments, the first location and the second location are at least 250 miles, at least 500 miles, at least 1,000 miles, at least 2,000 or at least 3,000 miles apart. In certain embodiments, the first location and the second location are between about 250 and about 1,000 miles apart, between about 500 and about 2,000 miles apart, between about 2,000 and about 5,000 miles apart, or between about 5,000 and about 10,000 miles apart. In certain embodiments, the first location and the second location are in different countries. In certain embodiments, the first location and the second location are on different continents.

In certain embodiments, the solid PPL is transported from the first location to the second location. In some embodiments, the solid PPL is transported a distance of more than 100 miles, more than 500 miles, more than 1,000 miles, more than 2,000 miles or more than 5,000 miles. In certain embodiments, the solid PPL is transported a distance of between 100 and 12,000 miles, between about 250 and about 1000 miles, between about 500 and about 2,000 miles, between about 2,000 and about 5,000 miles, or between about 5,000 and about 10,000 miles. In some embodiments, the solid PPL is transported from a first country to a second country. In certain embodiments, the solid PPL is transported from a first continent to a second continent.

In certain embodiments, the solid PPL is transported from the North America to Europe. In certain embodiments, the solid PPL is transported from the North America to Asia. In certain embodiments, the solid PPL is transported from the US to Europe. In certain embodiments, the solid PPL is transported from the US to Asia. In certain embodiments, the solid PPI. is transported from the Middle East to Asia. In certain embodiments, the solid PPL is transported from the Middle East to Europe. In certain embodiments, the solid PPL is transported from Saudi Arabia to Asia. In certain embodiments, the solid PPL is transported from Saudi Arabia to Europe.

The solid PPL may be transported by any suitable means, including, for example, by truck, train, tanker, barge, or ship, or any combinations of these. In some embodiments, the solid PPL is transported by at least two methods selected from truck, train, tanker, barge, and ship. In other embodiments, the solid PPL is transported by at least three methods selected from truck, train, tanker, barge, and ship.

In some embodiments, the solid PPL is in the form of pellets, flakes, granules, or extrudate, or any combination thereof. In some variations, the solid PPL is converted to an AA product stream using the thermolysis reactor as described herein. In some variations, the solid PPL is fed into an inlet of the thermolysis reactor and is converted to an AA product stream. In other embodiments, the solid PPL is converted to molten PPL, and the molten PPL is fed into an inlet of the thermolysis reactor as described herein and converted to an AA product stream.

### Acrylic Acid Production System

Polypropiolactone (PPL) can generally be converted to acrylic acid (AA) according to the following scheme:

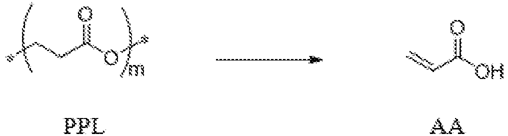

In certain embodiments, the polypropiolactone produced undergoes thermolysis continuously (e.g. in a fed batch reactor or other continuous flow reactor format). In certain embodiments, the continuous thermolysis process is linked to a continuous polymerization process to provide acrylic acid at a rate matched to the consumption rate of the reactor.

In some embodiments, the thermolysis reactor is a fluidized bed reactor. Inert gas may be used to fluidize inert solid heat transfer medium (HTM), and polypropiolactone is fed to the reactor. In some variations, the polypropiolactone may be fed to the reactor in molten form, for example, via a spay nozzle. The molten form may help facilitate the dispersion of polypropiolactone inside the reactor.

The reactor may be equipped with a cyclone that returns HTM solid back to the reactor. The inert gas, acrylic acid, and higher boiling impurities (such as succinic anhydride and acrylic acid dimer) are fed from the cyclone to a partial condenser where impurities are separated. For example, the condenser may be used to condense the high boiling impurities, and such impurities can then be purged from the reactor as a residual waste stream.

Acrylic acid with the inert gas may be fed to a second condenser where the acrylic acid and the inert gas are separated. A liquid acrylic acid stream is output from the second condenser, and the inert gas is output as a separate stream that may be returned back to the reactor to fluidize the heat transfer solid. The acrylic acid stream may be used for condensation/absorption and then storage.

The residual waste stream purged from the reactor may include, for example, high boiling organics (or organic heavies), for example, resulting from the polymerization catalyst and succinic anhydride. In some embodiments, the high boiling organics (or organic heavies) may include any compounds which are not acrylic acid. In certain embodiments, the high boiling organics (or organic heavies) may include any compounds which remain in the bottoms stream after condensing the acrylic acid in the acrylic acid production system. In some embodiments, the high boiling organics (or organic heavies) may include succinic anhydride or polymerization catalyst. In some embodiments, the high boiling organics (or organic heavies) have a boiling point higher than acrylic acid.

In other embodiments, the thermolysis reactor is a moving bed reactor. Polypropiolactone is fed into a moving bed reactor as a solid and acrylic acid exits the reactor as a vapor stream and is then condensed.

In some variations, the thermolysis process is operated under an oxygen and water free atmosphere. For example, in certain variations, the amount of oxygen present in the thermolysis reactor is less than 1 wt%, less than 0.5 wt%, less than 0.01 wt%, or less than 0.001 wt%. In certain variations, the amount of water present in the thermolysis reactor is less than 1 wt%, less than 0.5 wt%, less than 0.01 wt%, or less than 0.001 wt%.

In some variations, acrylic acid produced according to the systems and methods described herein has a purity of at least 98%, at least 98.5%, at least 99%, at least 99.1%, at least 99.2%, at least 99.3%, at least 99.4%, at least 99.5%, at least 99.6%, at least 99.7%, at least 99.8%, or at least 99.9%; or between 99% and 99.95%, between 99.5% and 99.95%, between 99.6% and 99.95%, between 99.7% and 99.95%, or between 99.8% and 99.95%.

In other variations, acrylic acid produced according to the systems and methods described herein is suitable to make high molecular weight polyacrylic acid. In certain variations, acrylic acid produced according to the systems and methods described herein may have a lower purity, such as 95%. Thus, in one variation, the acrylic acid has a purity of at least 95%.

In yet other variations, the acrylic acid has:
(i) a cobalt level of less than 10 ppm, less than 100 ppm, less than 500 ppm, less than 1 ppb, less than 10 ppb, or less than 100 ppb; or
(ii) an aluminum level of less than 10 ppm, less than 100 ppm, less than 500 ppm, less than 1 ppb, less than 10 ppb, or less than 100 ppb; or
(iii) a beta-propiolactone level of less than 1 ppm, less than 10 ppm, less than 100 ppm, less than 500 ppm, less than 1 ppb, or less than 10 ppb;
(iv) an acrylic acid dimer level of less than 2000 ppm, less than 2500 ppm, or less than 5000 ppm; or
(v) a water content of less than 10 ppm, less than 20 ppm, less than 50 ppm, or less than 100 ppm,
or any combination of (i) to (v).

Unlike known methods to produce acrylic acid, acetic acid, furfurals and other furans are not produced and thus, are not present in the acrylic acid produced.

Acrylic acid may be used to make polyacrylic acid for superabsorbent polymers (SAPs) in disposable diapers, training pants, adult incontinence undergarments and sanitary napkins. The low levels of impurities present in the acrylic acid produced according to the systems and methods herein help to facilitate a high-degree of polymerization to acrylic acid polymers (PAA) and avoid adverse effects from by-products in end applications. For example, aldehyde impurities in acrylic acid hinder polymerization and may discolor the polymerized acrylic acid. Maleic anhydride impurities form undesirable copolymers which may be detrimental to polymer properties. Carboxylic acids, e.g., saturated carboxylic acids that do not participate in the polymerization, can affect the final odor of PAA or SAP-containing products and/or detract from their use. For example, foul odors may emanate from SAP that contains acetic acid or propionic acid and skin irritation may result from SAP that contains formic acid. The reduction or removal of impurities from petroleum-based acrylic acid can be costly, whether to produce petroleum-based crude acrylic acid or petroleum-based acrylic acid.

### EXAMPLES

The following Examples are merely illustrative and are not meant to limit any aspects of the present disclosure in any way.

### Example 1A

### Synthesis of a Porphyrin Linker

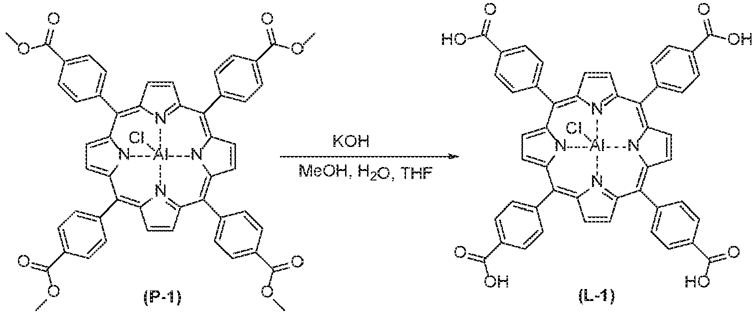

This example describes the synthesis of a porphyrin linker. Linker precursor, compound P-1, may be obtained from commercially available sources or prepared according to any methods known in the art. Compound P-1 is combined with potassium hydroxide, methanol, water and tetrahydrofuran to produce compound L- 1.

### Example 1B

### Synthesis of a Porphyrin Metal-Organic Framework

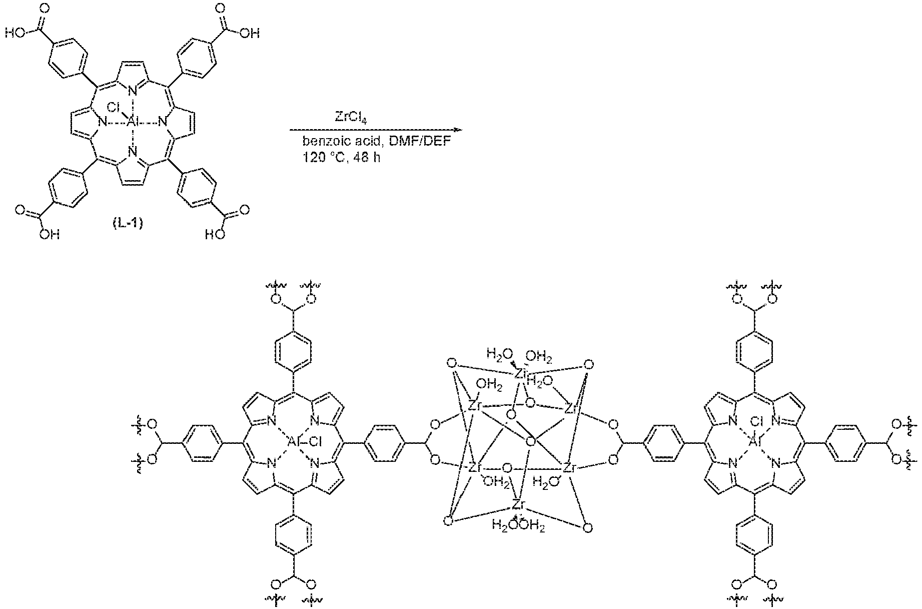

It should be understood that 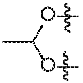 denotes connection of the carboxylate from the porphyrin to the metal-oxocluster (MC) secondary building unit (SBU) at any of the metal positions, 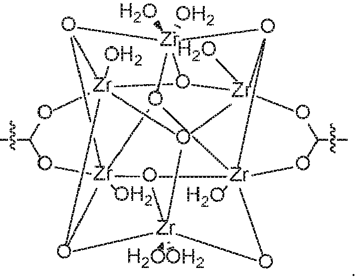 Alternatively, the repeating units of the metal-organic framework produced may be depicted as follows:

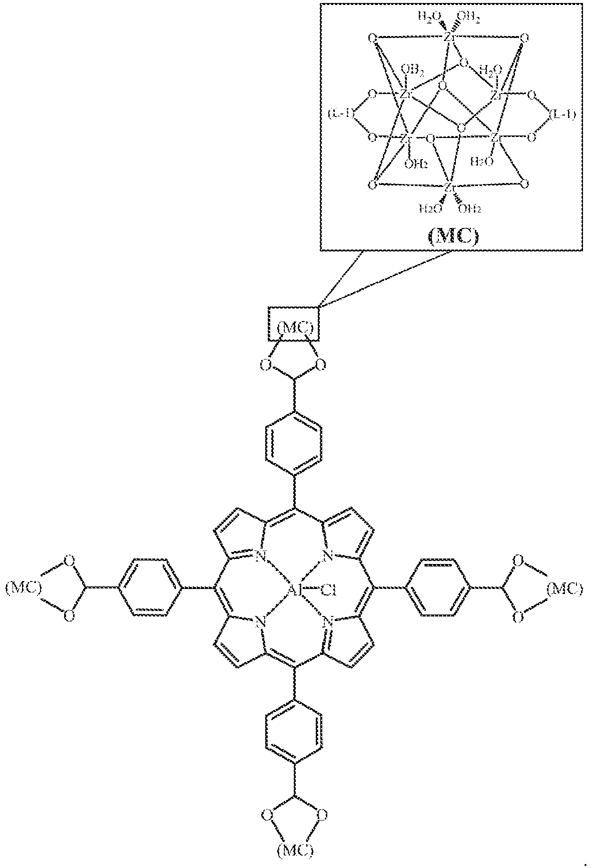

It should be further understood that the resulting metal-organic framework can be either two-dimensional or three-dimensional, with repeating units of the porphyrin linker connected by the SBUs.

This example describes an exemplary synthesis of a porphyrin metal-organic framework. The linker, compound L-1 is produced according to the method described in Example 1A above. Compound L-1 is combined with zirconium chloride, benzoic acid, and either dimethylformamide or diethylformamide. The resulting reaction mixture is heated to about 120 °C, with a slow temperature ramping to the target temperature. The reaction proceeds for up to 48 hours, and a sample of the reaction mixture is obtained after cooling down with slow temperature ramping, which yields a metal-organic framework with repeating units as depicted in the scheme above.

The sample is analyzed using various solid-state techniques, including powder X-ray diffraction (PXRD), single-crystal X-ray diffraction, ¹³C cross-polarization magic angle spinning NMR (CP-MAS) and Fourier-Transform Infrared (FT-IR) spectroscopies.

## Claims

1. A method to produce a metal-organic framework, comprising:
solvothermally reacting a linker with a metal salt in an amine-based solvent to produce a metal-organic framework, wherein:
the linker is 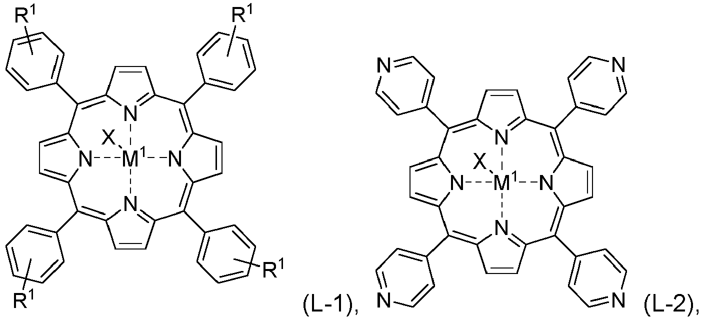 or 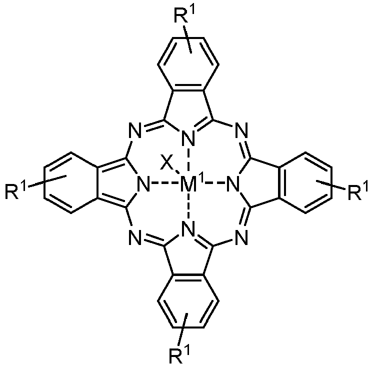 (L-3), wherein:
M¹ is a metal atom,
X is halo or tetrahydrofuran, and
R¹ is -COOH,
the metal salt is M²Y₂, wherein:
M² is zinc or zirconium, and
Y is nitrate, halo, or acetate, and
the metal-organic framework comprises repeating cores, wherein the cores comprise the linker coordinated to a secondary building unit through O-M²-O bonds, and wherein the metal-organic framework comprises a plurality of pores; and
soaking the metal-organic framework in a cobalt solution to incorporate a cobalt carbonyl moiety in at least a portion of the pores in the metal-organic framework, and
wherein M¹ is Zn(II), Cu(II), Mn(II), Co(II), Ru(II), Fe(II), Rh(II), Ni(II), Pd(II) Mg(II), AI(III), Cr(III), Cr(IV), Ti(IV), Fe(III), Co(III), Ti(III), In(III), Ga(III), or Mn(III)..

2. The method of claim 1, wherein solvothermally reacting the linker with the metal salt in the amine-based solvent to produce the metal-organic framework comprises:
mixing the linker with the metal salt in the amine-based solvent to produce a reaction mixture; and
heating the reaction mixture to a temperature between 80 °C and 140 °C to produce the metal-organic framework.

3. The method of any one of claims 1 or 2, wherein the linker is

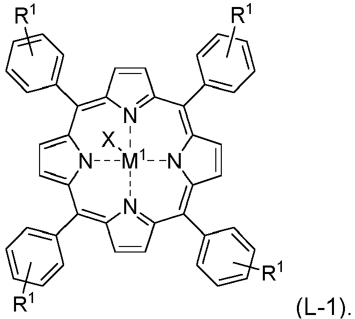

4. The method of claim 3, further comprising hydrolyzing a linker precursor to produce the linker, wherein:
the linker precursor is 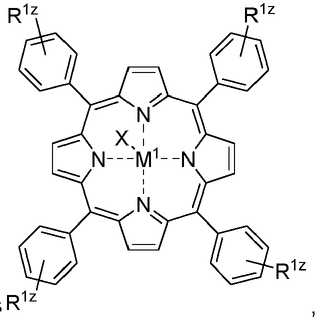 wherein:
R^{1z} is -COOR^{z}, wherein R^{z} is alkyl, and
X and M¹ are as defined in claim 1.

5. The method of claim 4, wherein R^{z} is methyl or ethyl.

6. The method of any one of claims 1 to 5, wherein the metal salt is Zn(NO₃)₂, ZrCl₄, or Zn(OAc)₂.

7. The method of any one of claims 1 to 6, further comprising additional copper salt or nickel salt, or a combination thereof, to dope the metal-organic framework at the M² site.

8. The method of any one of claims 1 to 7, wherein the amine-based solvent is a dialkylformamide solvent.

9. A metal-organic framework comprising repeating cores, wherein the cores comprise a linker coordinated to a secondary building unit through O-M²-O bonds, wherein:
the linker is 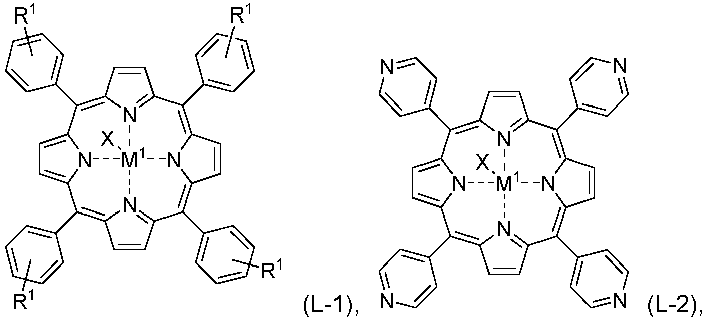 or 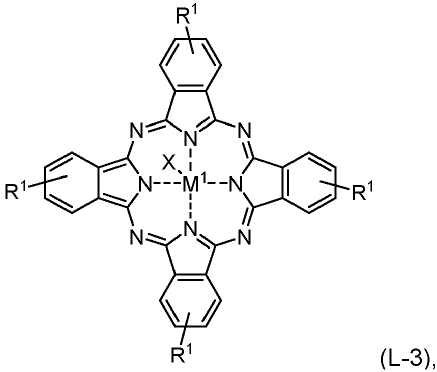 wherein:
M¹ is a metal atom,
X is halo or tetrahydrofuran, and
R¹ is -COOH,
M² is zinc or zirconium, and
wherein the metal-organic framework comprises a plurality of pores, and
wherein a cobalt carbonyl moiety occupies at least a portion of the plurality of pores, and
wherein M¹ is Zn(II), Cu(II), Mn(II), Co(II), Ru(II), Fe(II), Rh(II), Ni(II), Pd(II) Mg(II), AI(III), Cr(III), Cr(IV), Ti(IV), Fe(III), Co(III), Ti(III), In(III), Ga(III), or Mn(III)..

10. The metal-organic framework of claim 9, wherein the metal-organic framework is doped with copper or nickel, or a combination thereof, at the M² site.

11. The metal-organic framework of any one of claims 9 to 10, wherein the cobalt carbonyl moiety is Co(CO)₄⁻ or Co₂(CO)₆⁻.

## Patentansprüche

1. Verfahren zur Herstellung einer metallorganischen Struktur, welches umfasst:
ein solvothermisches Umsetzen eines Verbinders mit einem Metallsalz in einem Lösungsmittel auf Aminbasis, um eine metallorganische Struktur herzustellen, wobei: der Verbinder 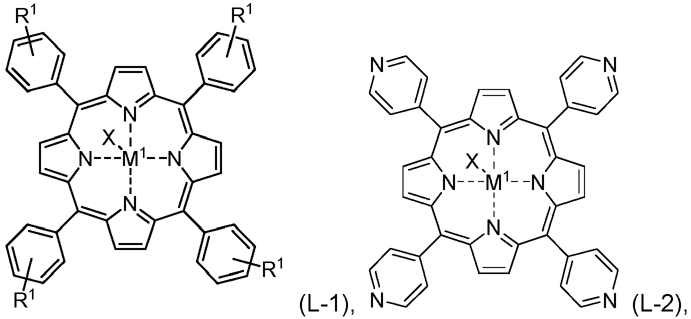 oder 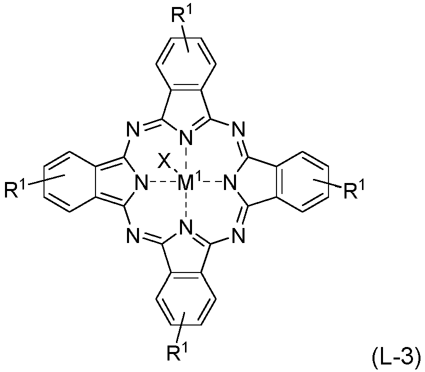 ist, wobei:
das M¹ ein Metallatom ist,
das X ein Halogen oder ein Tetrahydrofuran ist, und
das R¹ -COOH ist,
das Metallsalz ein M²Y₂ ist, wobei:
das M² Zink oder Zirconium ist, und
das Y ein Nitrat, ein Halogen oder ein Acetat ist, und
die metallorganische Struktur sich wiederholende Kerne aufweist, wobei die Kerne den Verbinder aufweisen, der mit einer sekundären Baueinheit durch O-M²-O-Bindungen koordiniert ist, und wobei die metallorganische Struktur eine Vielzahl an Poren aufweist, und
ein Tränken der metallorganischen Struktur in einer Kobaltlösung, um eine Kobaltcarbonylgruppe in mindestens einen Teil der Poren in der metallorganischen Struktur einzubauen, und
wobei das M¹ Zn(II), Cu(II), Mn(II), Co(II), Ru(II), Fe(II), Rh(II), Ni(II), Pd(II), Mg(II), Al(III), Cr(III), Cr(IV), Ti(IV), Fe(III), Co(III), Ti(III), In(III), Ga(III), oder Mn(III) ist.

2. Verfahren nach Anspruch 1, wobei das solvothermische Umsetzen des Verbinders mit dem Metallsalz in dem Lösungsmittel auf Aminbasis zur Herstellung der metallorganischen Struktur umfasst:
ein Mischen des Verbinders mit dem Metallsalz in dem Lösungsmittel auf Aminbasis, um eine Reaktionsmischung herzustellen, und
ein Erhitzen der Reaktionsmischung auf eine Temperatur zwischen 80 °C und 140 °C, um die metallorganische Struktur herzustellen.

3. Verfahren nach einem der Ansprüche 1 oder 2, wobei der Verbinder 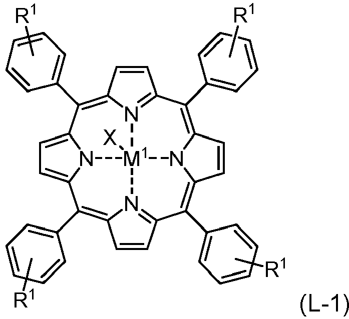 ist.

4. Verfahren nach Anspruch 3, welches ferner ein Hydrolysieren eines Verbinder-Vorläufers zur Herstellung des Verbinders umfasst, wobei:
der Verbinder-Vorläufer 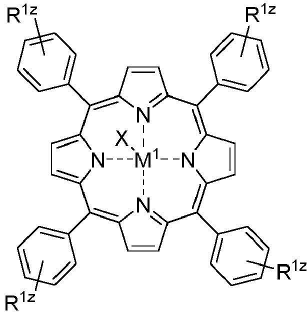 ist, wobei:
das R^{1z} -COOR^{z} ist, wobei das R^{z} ein Alkyl ist, und
das X und das M¹ wie in dem Anspruch 1 definiert sind.

5. Verfahren nach Anspruch 4, wobei das R^{z} ein Methyl oder ein Ethyl ist.

6. Verfahren nach einem der Ansprüche 1 bis 5, wobei das Metallsalz Zn(NO₃)₂, ZrC₄ oder Zn(OAc)₂ ist.

7. Verfahren nach einem der Ansprüche 1 bis 6, welches ferner ein zusätzliches Kupfersalz oder Nickelsalz oder eine Kombination davon umfasst, um die metallorganische Struktur an der M²-Stelle zu dotieren.

8. Verfahren nach einem der Ansprüche 1 bis 7, wobei das Lösungsmittel auf Aminbasis ein Dialkylformamid-Lösungsmittel ist.

9. Metallorganische Struktur, welche sich wiederholende Kerne aufweist, wobei die Kerne einen Verbinder aufweisen, der über O-M²-O-Bindungen mit einer sekundären Baueinheit koordiniert ist, wobei: der Verbinder 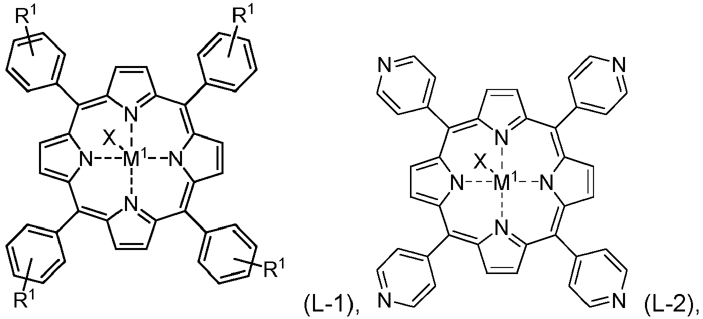 oder 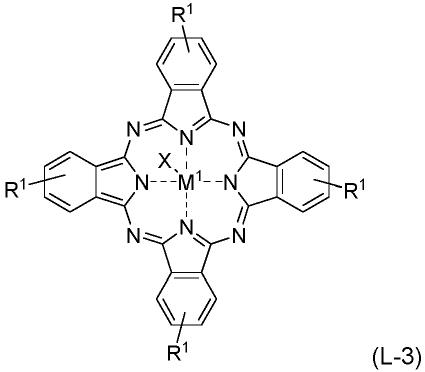 ist, wobei:
das M¹ ein Metallatom ist,
das X ein Halogen oder ein Tetrahydrofuran ist, und
das R¹ -COOH ist,
das M² Zink oder Zirkonium ist, und
wobei die metallorganische Struktur eine Vielzahl an Poren aufweist, und
wobei eine Kobaltcarbonylgruppe mindestens einen Teil der Vielzahl der Poren besetzt, und
wobei das M¹ Zn(II), Cu(II), Mn(II), Co(II), Ru(II), Fe(II), Rh(II), Ni(II), Pd(II), Mg(II), Al(III), Cr(III), Cr(IV), Ti(IV), Fe(III), Co(III), Ti(III), In(III), Ga(III) oder Mn(III) ist.

10. Metallorganische Struktur nach Anspruch 9, wobei die metallorganische Struktur mit Kupfer oder Nickel oder einer Kombination davon an der M²-Stelle dotiert ist.

11. Metallorganische Struktur nach einem der Ansprüche 9 bis 10, wobei die Kobaltcarbonylgruppe Co(CO)₄- oder Co₂(CO)₆- ist.

## Revendications

1. Procédé de production d'un réseau métalloorganique, comprenant :
la mise en réaction solvothermale d'un lieur avec un sel métallique dans un solvant aminé afin de produire un réseau métalloorganique, dans lequel :
le lieur est 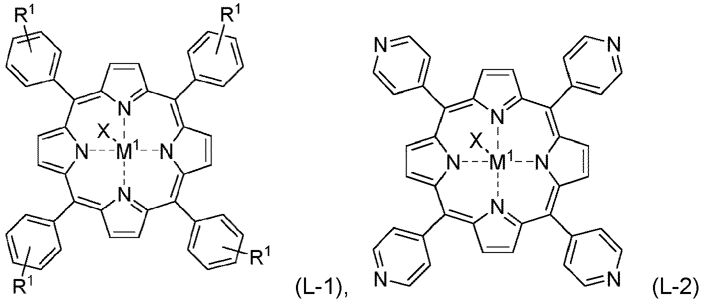 ou 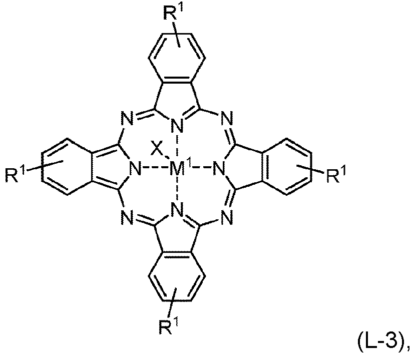 dans lequel :
M¹ est un atome de métal,
X est un halogéno ou le tétrahydrofurane, et
R¹ est -COOH,
le sel métallique est M²Y₂, dans lequel :
M² est le zinc ou le zirconium, et
Y est un nitrate, un halogéno ou un acétate, et
le réseau métalloorganique comprend des noyaux répétitifs, dans lequel les noyaux comprennent le lieur coordonné à une unité de construction secondaire par des liaisons O-M²-O, et dans lequel le réseau métalloorganique comprend une pluralité de pores ; et
le trempage du réseau métalloorganique dans une solution de cobalt afin d'incorporer un groupement carbonyle de cobalt dans au moins une partie des pores dans le réseau métalloorganique, et
dans lequel M¹ est Zn(II), Cu(II), Mn(II), Co(II), Ru(II), Fe(II), Rh(II), Ni(II), Pd(II) Mg(II), Al(III), Cr(III), Cr(IV), Ti(IV), Fe(III), Co(III), Ti(III), In(III), Ga(III) ou Mn(III).

2. Procédé selon la revendication 1, dans lequel la réaction solvothermale du lieur avec le sel métallique dans le solvant aminé afin de produire le réseau métalloorganique comprend : le mélange du lieur avec le sel métallique dans le solvant aminé pour produire un mélange réactionnel ; et
le chauffage du mélange réactionnel à une température comprise entre 80 °C et 140 °C pour produire le réseau métalloorganique.

3. Procédé selon l'une quelconque des revendications 1 ou 2, dans lequel le lieur est

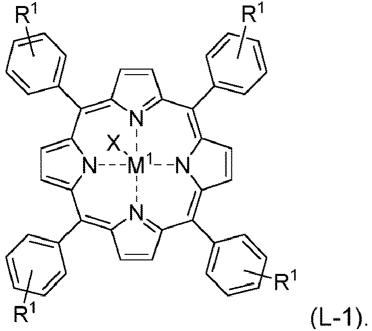

4. Procédé selon la revendication 3, comprenant en outre l'hydrolyse d'un précurseur du lieur afin de produire le lieur, dans lequel :
le précurseur du lieur est 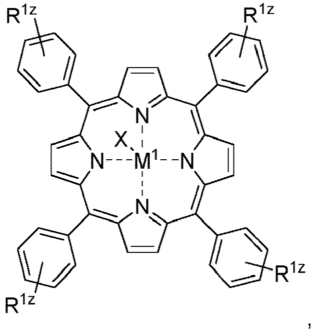 dans lequel :
R^{1z} est -COOR^{Z}, dans lequel R^{z} est un alkyle, et
X et M¹ sont tels que définis dans la revendication 1.

5. Procédé selon la revendication 4, dans lequel R^{z} est méthyle ou éthyle.

6. Procédé selon l'une quelconque des revendications 1 à 5, dans lequel le sel métallique est Zn(NO₃)₂, ZrCl₄ ou Zn(OAc)₂.

7. Procédé selon l'une quelconque des revendications 1 à 6, comprenant en outre un sel de cuivre ou un sel de nickel supplémentaire, ou une combinaison de ceux-ci, afin de doper le réseau métalloorganique au niveau du site M².

8. Procédé selon l'une quelconque des revendications 1 à 7, dans lequel le solvant aminé est un solvant de type dialkylformamide.

9. Réseau métalloorganique comprenant des noyaux répétitifs, dans lequel les noyaux comprennent un lieur coordonné à une unité de construction secondaire par des liaisons O-M²-O, dans lequel :
le lieur est 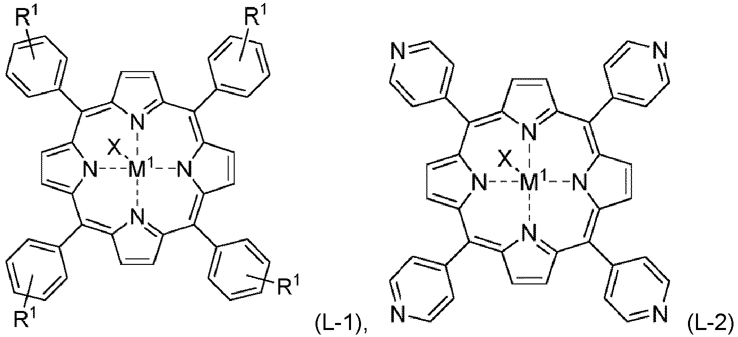 ou 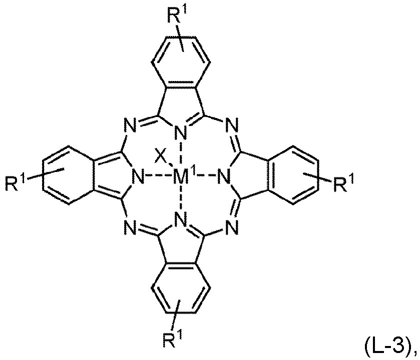 dans lequel :
M¹ est un atome de métal,
X est un halogéno ou le tétrahydrofurane, et
R¹ est -COOH,
M² est le zinc ou le zirconium, et
dans lequel le réseau métalloorganique comprend une pluralité de pores, et
dans lequel un groupement carbonyle de cobalt occupe au moins une partie de la pluralité de pores, et
dans lequel M¹ est Zn(II), Cu(II), Mn(II), Co(II), Ru(II), Fe(II), Rh(II), Ni(II), Pd(II), Mg(II), Al(III), Cr(III), Cr(IV), Ti(IV), Fe(III), Co(III), Ti(III), In(III), Ga(III) ou Mn(III).

10. Réseau métalloorganique selon la revendication 9, dans lequel le réseau métalloorganique est dopé au cuivre ou au nickel, ou à une combinaison de ceux-ci, au niveau du site M².

11. Réseau métalloorganique selon l'une des revendications 9 à 10, dans lequel le groupement carbonyle de cobalt est Co(CO)₄⁻ ou Co₂(CO)₆⁻.
